# EUROPEAN PATENT APPLICATION

(11) **EP 4 593 368 A1**
(43) Date of publication of application: **30.07.2025**
(21) Application number: 23868037.5
(22) Date of filing: 05.09.2023
(51) Int. Cl.: H04N 5/92, G06F 16/58, G06T 1/00, H04N 1/387, H04N 5/765, H04N 23/60

(54) **IMAGE PROCESSING DEVICE, METHOD FOR OPERATING IMAGE PROCESSING DEVICE, AND PROGRAM FOR OPERATING IMAGE PROCESSING DEVICE**

(30) Priority: 20.09.2022 JP 2022149484
(71) Applicant: FUJIFILM Corporation, Tokyo 106-8620 (JP)
(72) Inventor: OSHIMA, Kazuki, Saitama-shi, Saitama 331-9624 (JP)
(74) Representative: Meissner Bolte Partnerschaft mbB
(86) International application number: PCT/JP2023/032376
(87) International publication number: WO 2024/062913

(57) **Abstract**

There is provided an image processing device comprising: a processor, in which the processor is configured to: receive an input of an emotion of a user for an image at a plurality of timings; and store information of the emotion at the plurality of timings and the image in association with each other.

## Description

### BACKGROUND OF THE INVENTION

### 1. Field of the Invention

A technique of the present disclosure relates to an image processing device, a method for operating an image processing device, and a program for operating an image processing device.

### 2. Description of the Related Art

JP2017-092528A discloses an imaging device comprising an imaging unit, a display unit, a selection reception unit, an imaging instruction unit, and an association unit. The display unit displays a plurality of image elements representing different moods from each other. The selection reception unit receives a selection operation of a user from the image elements displayed by the display unit. The imaging instruction unit causes the imaging unit to capture an image in response to an operation of the user. The association unit associates mood information representing a mood associated with the selected image element with image data obtained by causing the imaging unit to capture an image in a case where the selection reception unit receives a selection operation of the image element within a predetermined period based on a timing at which the imaging instruction unit causes the imaging unit to capture an image.

### SUMMARY OF THE INVENTION

One embodiment according to the technique of the present disclosure provides an image processing device, a method for operating an image processing device, and a program for operating an image processing device capable of more accurately recognizing an emotion of a user for an image.

According to the present disclosure, there is provided an image processing device comprising: a processor, in which the processor is configured to: receive an input of an emotion of a user for an image at a plurality of timings; and store information of the emotion at the plurality of timings and the image in association with each other.

Preferably, the image may be a printed image printed and output on an instant film, and the plurality of timings may be a combination selected from a timing at which the printed image is captured, a timing at which an image of the instant film is stored as a digital image, and a timing at which the digital image of the instant film is posted on a social networking service.

Preferably, the processor may be configured to apply a display effect corresponding to the information of the emotion in a case where the image is displayed.

Preferably, the image may be searchable by using, as a search keyword, the information of the emotion.

Preferably, the processor may be configured to: estimate the emotion by using a machine learning model that outputs the information of the emotion in response to an input of the image; and display the estimated emotion for the user.

Preferably, the information of the emotion and the image that are stored in association with each other may be used as training data of the machine learning model.

Preferably, the image may be a printed image printed and output on an instant film, the plurality of timings may include a timing at which the printed image is captured, and the processor may be configured to: acquire a digital image of the instant film; read a text, which is actually written in the instant film by the user, by performing image analysis on the digital image; perform natural language analysis on the text; estimate the emotion at the timing at which the printed image is captured based on a result of the natural language analysis; and display the estimated emotion for the user.

Preferably, the image may be a printed image printed and output on an instant film, the plurality of timings may include a timing at which a digital image of the instant film is posted on a social networking service, and the processor is configured to: acquire a text which is input by the user in a case where the digital image is posted on the social networking service; perform natural language analysis on the text; estimate the emotion at the timing at which the digital image is posted on the social networking service based on a result of the natural language analysis; and display the estimated emotion for the user.

Preferably, the processor may be configured to: acquire state information of the user from a wearable device worn by the user; estimate the emotion based on the state information; and display the estimated emotion for the user.

Preferably, the processor may be configured to: detect an expression of a person appearing in the image; estimate the emotion based on a detection result of the expression; and display the estimated emotion for the user.

According to the present disclosure, there is provided a method for operating an image processing device, the method comprising: receiving an input of an emotion of a user for an image at a plurality of timings; and storing information of the emotion at the plurality of timings and the image in association with each other.

According to the present disclosure, there is provided a program for operating an image processing device, the program causing a computer to execute a process comprising: receiving an input of an emotion of a user for an image at a plurality of timings; and storing information of the emotion at the plurality of timings and the image in association with each other.

### BRIEF DESCRIPTION OF THE DRAWINGS

Fig. 1 is a diagram showing an instant camera, a user terminal, and an image management server.
Fig. 2 is a block diagram showing a computer constituting a user terminal and an image management server.
Fig. 3 is a block diagram showing a processing unit of a CPU of the user terminal.
Fig. 4 is a diagram showing a storage instruction screen.
Fig. 5 is a diagram showing a storage instruction screen after a storage instruction button is pressed.
Fig. 6 is a diagram showing an emotion input menu at a capturing timing.
Fig. 7 is a diagram showing processing of a browser control unit in a case where an OK button is pressed on the storage instruction screen of Fig. 5.
Fig. 8 is a diagram showing an image reproduction/display screen.
Fig. 9 is a diagram showing an image reproduction/display screen after a posting button is pressed.
Fig. 10 is a diagram showing processing of the browser control unit in a case where an OK button is pressed on the image reproduction/display screen of Fig. 9.
Fig. 11 is a diagram showing a display effect in a case where an emotion is "anger".
Fig. 12 is a diagram showing a display effect in a case where an emotion is "sadness".
Fig. 13 is a diagram showing a display effect in a case where an emotion is "pleasure".
Fig. 14 is a block diagram showing a processing unit of a CPU of the image management server.
Fig. 15 is a diagram showing details of data stored in an image DB.
Fig. 16 is a diagram showing processing of each processing unit of the image management server in a case where a first storage request is transmitted from the user terminal.
Fig. 17 is a diagram showing processing of each processing unit of the image management server in a case where a second storage request is transmitted from the user terminal.
Fig. 18 is a diagram showing an image list display screen.
Fig. 19 is a diagram showing processing of the browser control unit in a case where a search keyword is input to a search bar.
Fig. 20 is a diagram showing processing of each processing unit of the image management server in a case where a search request is transmitted from the user terminal.
Fig. 21 is a diagram showing an image list display screen on which a search result is displayed.
Fig. 22 is a flowchart showing a processing procedure of the user terminal.
Fig. 23 is a flowchart showing a processing procedure of the image management server.
Fig. 24 is a flowchart showing a processing procedure of the user terminal.
Fig. 25 is a flowchart showing a processing procedure of the image management server.
Fig. 26 is a diagram showing processing of each processing unit of the image management server in a case where an emotion estimation request is transmitted from the user terminal.
Fig. 27 is a diagram showing processing of an emotion estimation unit.
Fig. 28 is a diagram showing an emotion input menu at a capturing timing in a case where an emotion estimation result is displayed in a form of a balloon message.
Fig. 29 is a diagram showing processing in a learning phase of an emotion estimation model.
Fig. 30 is a diagram showing another example of processing in the learning phase of the emotion estimation model.
Fig. 31 is a diagram showing an adoption policy of training data of the emotion estimation model.
Fig. 32 is a diagram showing processing of each processing unit of the image management server in a case where an emotion estimation request including an image of an instant film in which a text is actually written is transmitted from the user terminal.
Fig. 33 is a diagram showing a detailed configuration of an emotion estimation unit in the form shown in Fig. 32.
Fig. 34 is a diagram showing processing of each processing unit of the image management server in a case where an emotion estimation request including information of a text, which is input by a user in a case of posting an image of an instant film, is transmitted from the user terminal.
Fig. 35 is a diagram showing a detailed configuration of an emotion estimation unit in the form shown in Fig. 34.
Fig. 36 is a diagram showing a smart watch and state information.
Fig. 37 is a graph showing body temperature variation data.
Fig. 38 is a diagram showing processing of each processing unit of the image management server in a case where an emotion estimation request including state information is transmitted from the user terminal.
Fig. 39 is a diagram showing processing of each processing unit of the image management server in a case where an emotion estimation request including a printed image in which a face appears is transmitted from the user terminal.
Fig. 40 is a diagram showing a detailed configuration of an emotion estimation unit in the form shown in Fig. 39.
Fig. 41 is a diagram showing an emotion estimation model that outputs an emotion estimation result in response to an input of a printed image, a text reading result, and state information.

### DESCRIPTION OF THE PREFERRED EMBODIMENTS

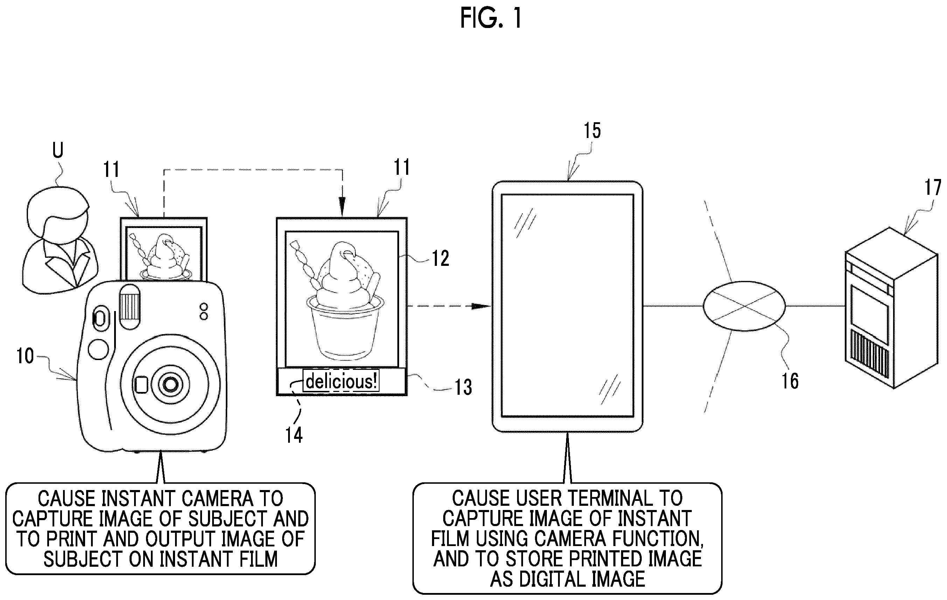

As shown in Fig. 1 as an example, a user U causes an instant camera 10 to capture an image of a subject and to print and output the image of the subject on an instant film 11. The instant film 11 may be any of a silver halide type or a heat-sensitive type. In Fig. 1, an ice cream parfait is exemplified as a subject. Hereinafter, the image printed and output on the instant film 11 is referred to as a printed image 12.

The printed image 12 is disposed in a substantially central portion of the instant film 11. In addition, a size of the printed image 12 is slightly smaller than a size of the instant film 11. Therefore, a margin is provided between an edge of the instant film 11 and an edge of the printed image 12. In particular, a relatively large margin 13 is provided at a lower portion of the instant film 11. The user U can write a text 14 in the margin 13 with an oil-based pen or the like. Fig. 1 shows an example in which "delicious!" is written as the text 14.

The user U causes a user terminal 15 to capture an image of the instant film 11 using a camera function of the user terminal 15, and to store the image of the instant film 11 as a digital image. The user terminal 15 is a device having a camera function, an image reproduction/display function, an image transmission/reception function, and the like. Specifically, the user terminal 15 is a smartphone, a tablet terminal, a compact digital camera, a mirrorless single-lens camera, a notebook personal computer, or the like. The user terminal 15 is an example of an "image processing device" according to the technique of the present disclosure.

The user terminal 15 is connected to an image management server 17 through a network 16 such that mutual communication can be performed. The network 16 is, for example, a wide area network (WAN) such as the Internet or a public communication network. The user terminal 15 transmits (uploads) the printed image 12 to the image management server 17. In addition, the user terminal 15 receives (downloads) the printed image 12 from the image management server 17.

The image management server 17 is, for example, a server computer, a workstation, or the like, and is an example of an "image processing device" according to the technique of the present disclosure, together with the user terminal 15. As described above, the "image processing device" according to the technique of the present disclosure may be implemented by a plurality of devices. A plurality of user terminals 15 of a plurality of users U are connected to the image management server 17 through the network 16.

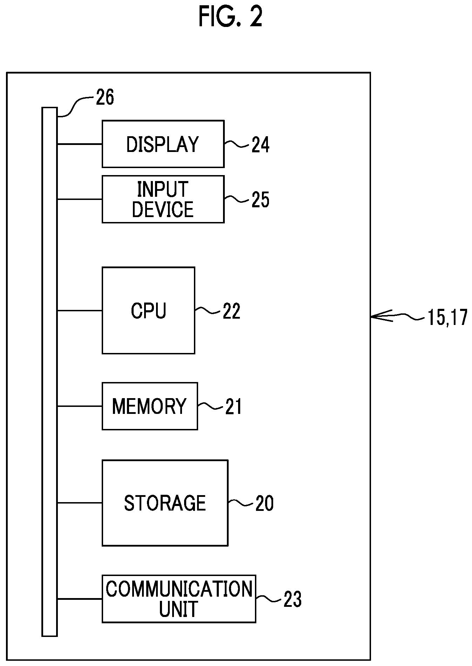

As shown in Fig. 2 as an example, the computers constituting the user terminal 15 and the image management server 17 basically have the same configuration, and comprise a storage 20, a memory 21, a central processing unit (CPU) 22, a communication unit 23, a display 24, and an input device 25. These units are connected to each other through a bus line 26.

The storage 20 is a hard disk drive that is built in the computers constituting the user terminal 15 and the image management server 17 or is connected to the computer through a cable or a network. Alternatively, the storage 20 is a disk array in which a plurality of hard disk drives are connected in series. A control program, such as an operating system, various application programs (hereinafter, abbreviated as AP), various data associated with these programs, and the like are stored in the storage 20. It is noted that a solid state drive may be used instead of the hard disk drive.

The memory 21 is a work memory which is necessary to execute processing by the CPU 22. The CPU 22 loads the program stored in the storage 20 into the memory 21, and executes processing according to the program. Thereby, the CPU 22 integrally controls each unit of the computer. The CPU 22 is an example of a "processor" according to the technique of the present disclosure. It is noted that the memory 21 may be built in the CPU 22.

The communication unit 23 is a network interface that controls the transmission of various types of information through the network 16 or the like. The display 24 displays various screens. The various screens have operation functions by a graphical user interface (GUI). The computers constituting the user terminal 15 and the image management server 17 receive input of an operation instruction from the input device 25 through various screens. The input device 25 is, for example, a keyboard, a mouse, a touch panel, and a microphone for voice input.

It is noted that, in the following description, each unit (the storage 20, the CPU 22, the display 24, and the input device 25) of the computer constituting the user terminal 15 is distinguished by adding a subscript "A" to the reference numeral, and each unit (the storage 20 and the CPU 22) of the computer constituting the image management server 17 is distinguished by adding a subscript "B" to the reference numeral.

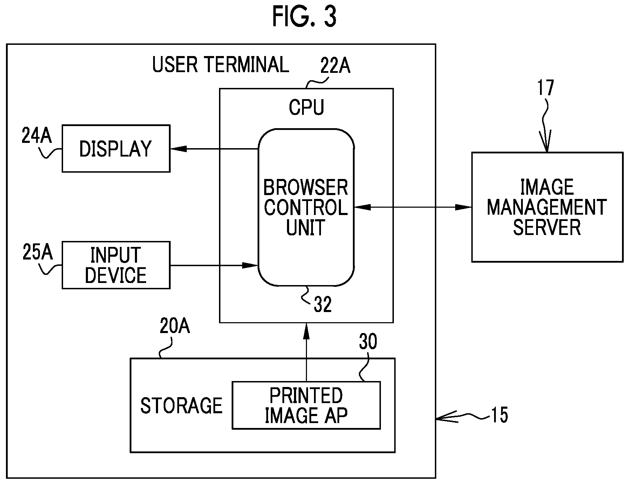

As shown in Fig. 3 as an example, a printed image AP 30 is stored in the storage 20A of the user terminal 15. The printed image AP 30 is installed on the user terminal 15 by the user U. The printed image AP 30 is an AP for causing the computer constituting the user terminal 15 to function as an "image processing device" according to the technique of the present disclosure. That is, the printed image AP 30 is an example of a "program for operating an image processing device" according to the technique of the present disclosure. In a case where the printed image AP 30 is activated, the CPU 22A of the user terminal 15 functions as a browser control unit 32 in cooperation with the memory 21 and the like. The browser control unit 32 controls an operation of a dedicated web browser of the printed image AP 30.

The browser control unit 32 generates various screens. The browser control unit 32 displays the generated various screens on the display 24A. In addition, the browser control unit 32 receives various operation instructions which are input from the input device 25A by the user U through various screens. The browser control unit 32 transmits various requests according to the operation instructions to the image management server 17.

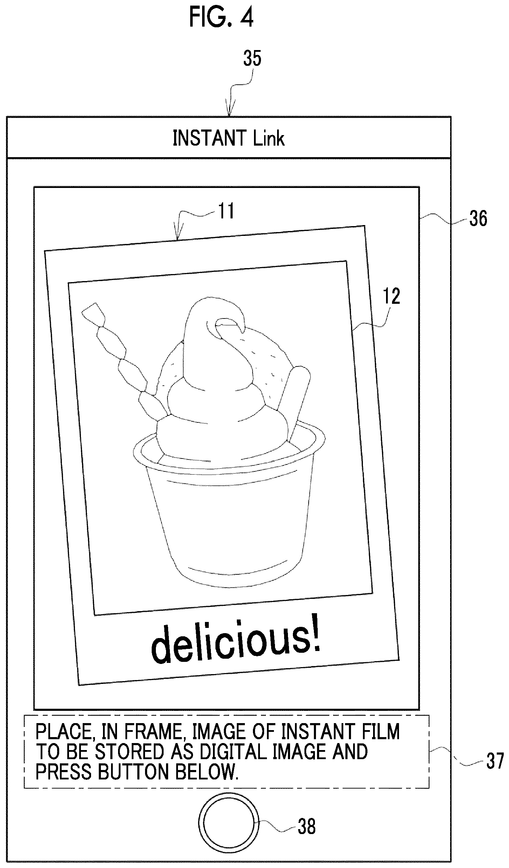

As shown in Fig. 4 as an example, the browser control unit 32 displays a storage instruction screen 35 on the display 24A in response to an instruction from the user U. The storage instruction screen 35 is a screen for issuing a storage instruction for storing the image of the instant film 11, that is, the printed image 12 as a digital image. On the storage instruction screen 35, a frame 36 for placing the image of the instant film 11 to be stored as the digital image, a message 37, and a storage instruction button 38 are displayed. The message 37 includes content of prompting the user U to place, in the frame 36, the image of the instant film 11 to be stored as the digital image and to press the storage instruction button 38. The storage instruction button 38 functions as, in other words, a shutter button.

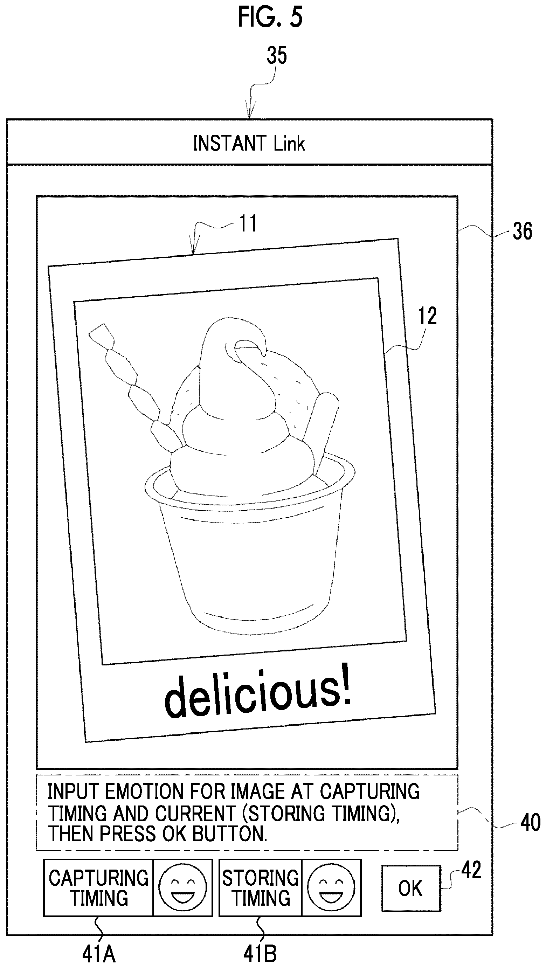

The user U places, in the frame 36, the image of the instant film 11 to be stored as the digital image, and presses the storage instruction button 38, in response to the message 37. In a case where the storage instruction button 38 is pressed, the browser control unit 32 performs transition of the display of the storage instruction screen 35 to a screen shown in Fig. 5.

As shown in Fig. 5 as an example, a message 40, an emotion input menu 41A, an emotion input menu 41B, and an OK button 42 are provided on the storage instruction screen 35 after the storage instruction button 38 is pressed. The message 40 includes content of prompting the user U to input an emotion for the printed image 12 at a timing at which the printed image 12 is captured (hereinafter, referred to as a capturing timing) and a timing at which the image of the instant film 11 (the printed image 12) is stored as a digital image (hereinafter, referred to as a storing timing) and to press the OK button 42. The emotion input menu 41A is a GUI for inputting an emotion of the user U for the printed image 12 at the capturing timing. The emotion input menu 41B is a GUI for inputting an emotion of the user U for the printed image 12 at the storing timing. Hereinafter, in a case where the emotion input menus 41A and 41B do not need to be particularly distinguished from each other, the emotion input menus 41A and 41B may be referred to as the emotion input menu 41.

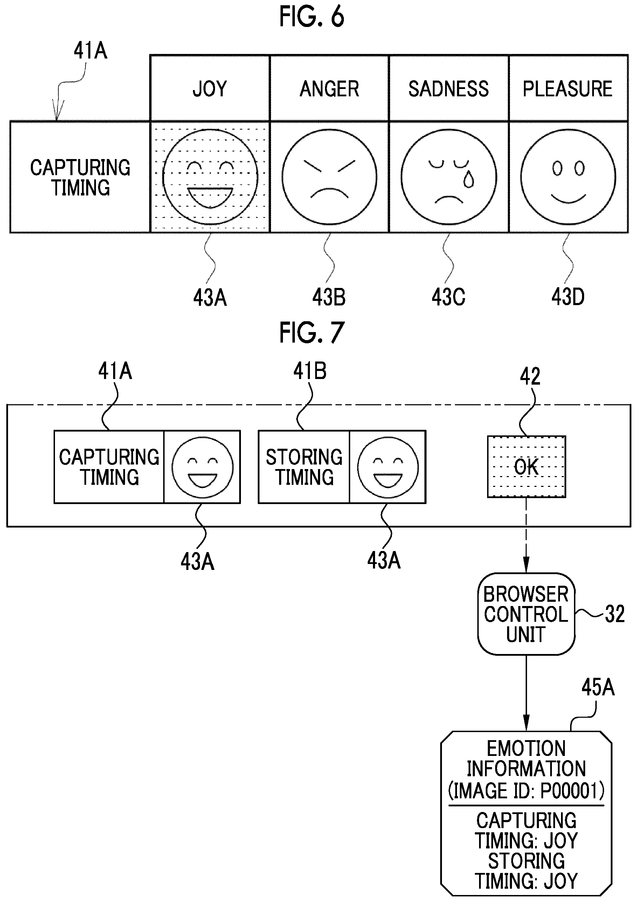

As shown in Fig. 6 as an example, the emotion input menu 41Aincludes a face type 43A representing "joy" as an emotion, a face type 43B representing "anger" as an emotion, a face type 43C representing "sadness" as an emotion, and a face type 43D representing "pleasure" as an emotion. Characters indicating emotions represented by each of the face types 43A to 43D are displayed at upper portions of the face types 43A to 43D. Hereinafter, in a case where the face types 43A to 43D do not need to be particularly distinguished from each other, the face types 43A to 43D may be referred to as the face type 43.

The face types 43A to 43D are displayed in a case where the emotion input menu 41A is selected in a state shown in Fig. 5. Any one of the face type 43A, ..., or 43D can be selected. The user U selects one face type 43, which is suitable as the emotion for the printed image 12 at the capturing timing, among the face types 43A to 43D. In Fig. 6, as shown by hatching, an example in which the face type 43A representing "joy" as an emotion is selected is shown. It is noted that, since the emotion input menu 41B has the same configuration as the emotion input menu 41A, illustration and description of the emotion input menu 41B will be omitted.

As shown in Fig. 7 as an example, the user U inputs a desired emotion in the emotion input menus 41A and 41B in response to the message 40, and then presses the OK button 42. In a case where the OK button 42 is pressed, the browser control unit 32 generates emotion information 45A. The emotion information 45A includes emotions at the capturing timing and at the storing timing that are input in the emotion input menus 41A and 41B. In addition, the emotion information 45A includes an image ID (identification data) for uniquely identifying the printed image 12. Fig. 7 shows an example of generating the emotion information 45A in a case where the face type 43A representing "joy" is selected in both the emotion input menus 41A and 41B and "joy" is registered as the emotion at the capturing timing and the storing timing.

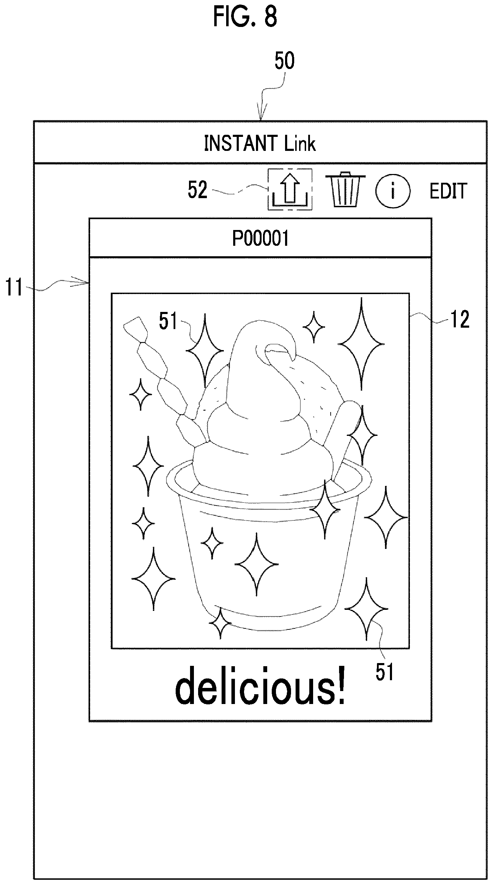

As shown in Fig. 8 as an example, the browser control unit 32 displays an image reproduction/display screen 50 on the display 24A in response to an instruction from the user U. The image reproduction/display screen 50 is a screen for reproducing and displaying the image of the instant film 11 stored as the digital image, that is, the printed image 12. The browser control unit 32 applies a display effect according to the emotion information 45A to the printed image 12. Fig. 8 shows an example of the emotion information 45A in a case where "joy" is registered as the emotion at the capturing timing and the storing timing shown in Fig. 7. In this case, the browser control unit 32 displays a plurality of star marks 51 on the printed image 12 as the display effect.

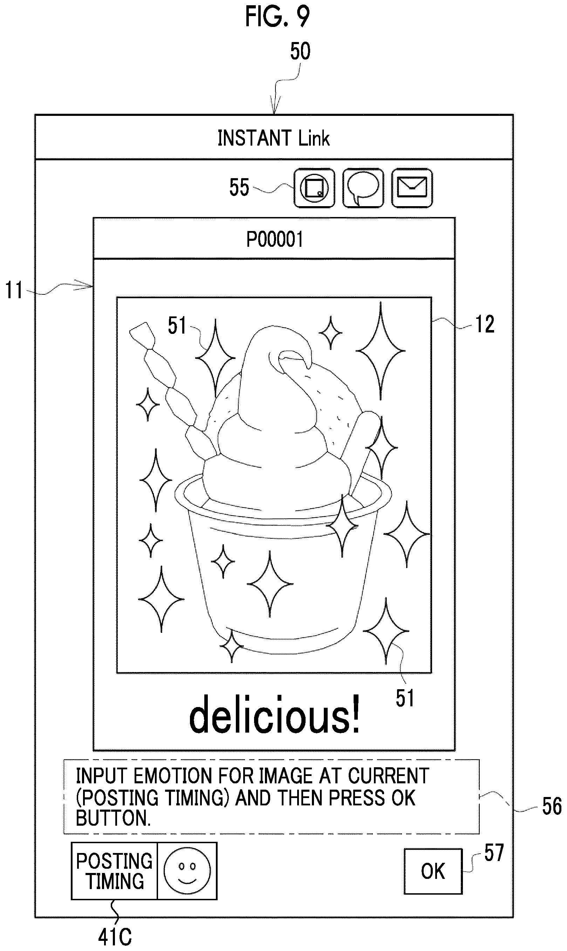

On the image reproduction/display screen 50, a posting button 52 for posting the image of the instant film 11 stored as the digital image on a social networking service (hereinafter, referred to as SNS) through an application program is provided. In a case where the posting button 52 is pressed, the browser control unit 32 performs transition of the display of the image reproduction/display screen 50 to a screen shown in Fig. 9.

As shown in Fig. 9 as an example, on the image reproduction/display screen 50 after the posting button 52 is pressed, icons 55 of various SNS application programs, a message 56, an emotion input menu 41C, and an OK button 57 are provided. The message 56 is content for prompting the user U to input an emotion for the printed image 12 at a timing at which the digital image of the instant film 11 is posted on the SNS (hereinafter, referred to as a posting timing) and to press the OK button 57. The emotion input menu 41C is a GUI for inputting an emotion of the user U for the printed image 12 at the posting timing. Since the emotion input menu 41C has the same configuration as the emotion input menu 41A and the like, illustration and description of the emotion input menu 41C will be omitted.

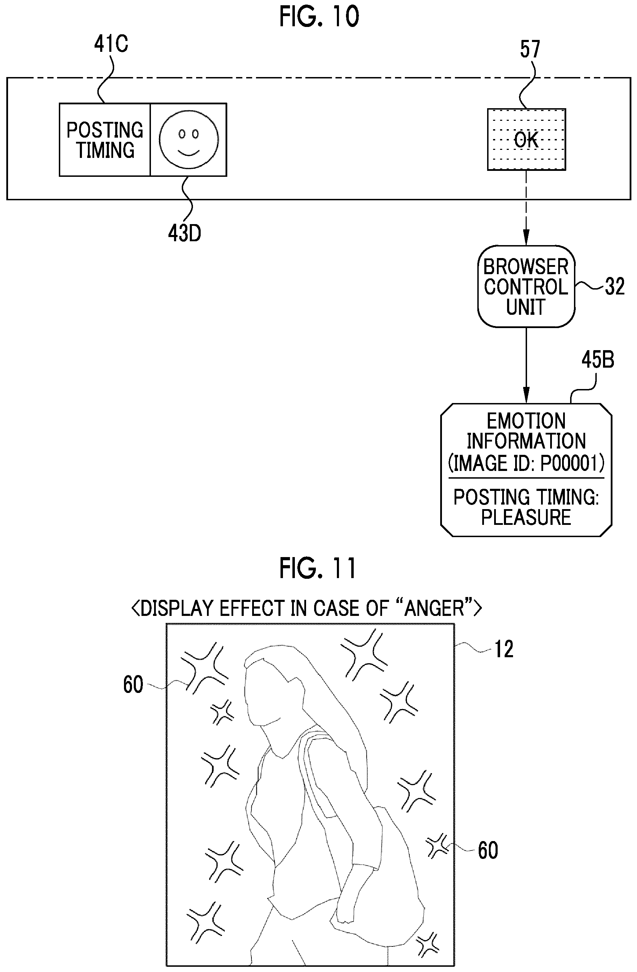

As shown in Fig. 10 as an example, the user U selects the icon 55, inputs a desired emotion in the emotion input menu 41C in response to the message 56, and then presses the OK button 57. In a case where the OK button 57 is pressed, the browser control unit 32 generates emotion information 45B. The emotion information 45B includes an emotion at the posting timing that is input in the emotion input menu 41C, and an image ID. Fig. 10 shows an example of generating the emotion information 45B in a case where the face type 43D representing "pleasure" is selected in the emotion input menu 41C and "pleasure" is registered as the emotion at the posting timing. Hereinafter, in a case where pieces of emotion information 45A and 45B do not need to be particularly distinguished from each other, the pieces of emotion information 45A and 45B may be referred to as the emotion information 45.

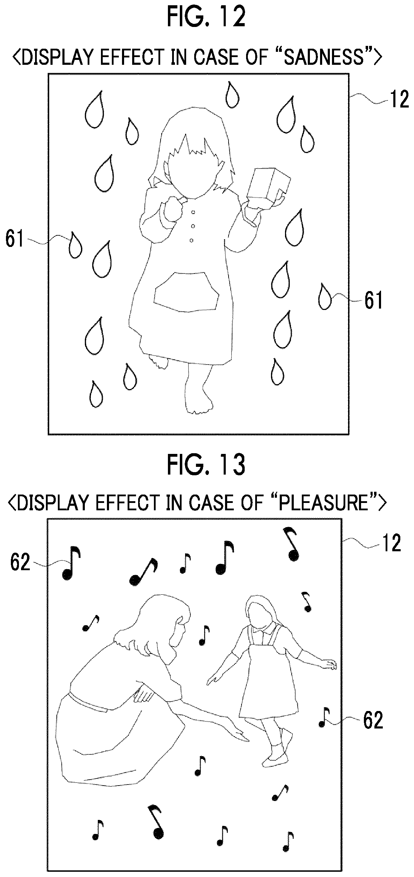

Figs. 8 and 9 show the display effect in a case where the emotion is "joy". On the other hand, the display effect in a case of another emotion is as shown in Figs. 11 to 13 as an example. That is, in a case where the emotion is "anger", as shown in Fig. 11, the browser control unit 32 displays, as the display effect, a plurality of anger marks 60, which imitate blood vessels of temples, so-called blue veins, on the printed image 12. In a case where the emotion is "sadness", as shown in Fig. 12, the browser control unit 32 displays, as the display effect, a plurality of tear marks 61, which imitate drops of tears, on the printed image 12. In a case where the emotion is "pleasure", as shown in Fig. 13, the browser control unit 32 displays, as the display effect, a plurality of musical note marks 62 on the printed image 12.

The browser control unit 32 performs the display effect on the printed image 12 even in a case where the digital image of the instant film 11 is posted on the SNS and then the printed image 12 is reproduced and displayed on the image reproduction/display screen 50. The browser control unit 32 performs a display effect in accordance with the emotion having a large number of selections at the capturing timing, the storing timing, and the posting timing. For example, in a case where the emotions at the capturing timing and the storing timing are both "joy" and the emotion at the posting timing is "pleasure", the browser control unit 32 performs a display effect using the star marks 51 corresponding to "joy". In a case where the emotions at the capturing timing and the storing timing are different or the emotions at the capturing timing, the storing timing, and the posting timing are different, the browser control unit 32 performs a display effect in accordance with the emotion at a more recent timing. It is noted that the display effect may be performed in an animation manner such as blinking the star marks 51, changing sizes of the anger marks 60, flowing the tear marks 61 up and down, or changing angles of the musical note marks 62.

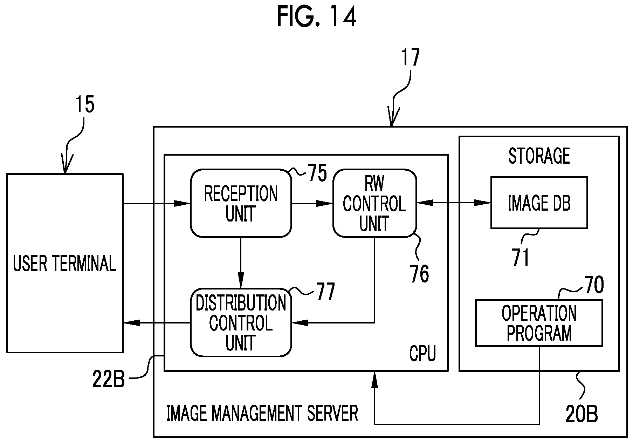

As shown in Fig. 14 as an example, an operation program 70 is stored in a storage 20B of the image management server 17. The operation program 70 is an AP for causing the computer constituting the image management server 17 to function as an "image processing device" according to the technique of the present disclosure. That is, the operation program 70 is an example of a "program for operating an image processing device" according to the technique of the present disclosure, similarly to the printed image AP 30. The storage 20B also stores an image database (hereinafter, referred to as a DB) 71. In addition, although not shown, as account information of the user U, a user ID for uniquely identifying the user U, a password which is set by the user U, and a terminal ID for uniquely identifying the user terminal 15 are stored in the storage 20B.

In a case where the operation program 70 is activated, the CPU 22B of the image management server 17 functions as a reception unit 75, a read/write (hereinafter, referred to as RW) control unit 76, and a distribution control unit 77 in cooperation with the memory 21 and the like.

The reception unit 75 receives various requests from the user terminal 15. The reception unit 75 outputs various requests to the RW control unit 76 and the distribution control unit 77. The RW control unit 76 controls storing of various types of data in the storage 20B and reading of various types of data from the storage 20B. The RW control unit 76 particularly controls storing of the printed image 12 and the like in the image DB 71 and reading of the printed image 12 and the like from the image DB 71. The distribution control unit 77 controls distribution of various types of data to the user terminal 15.

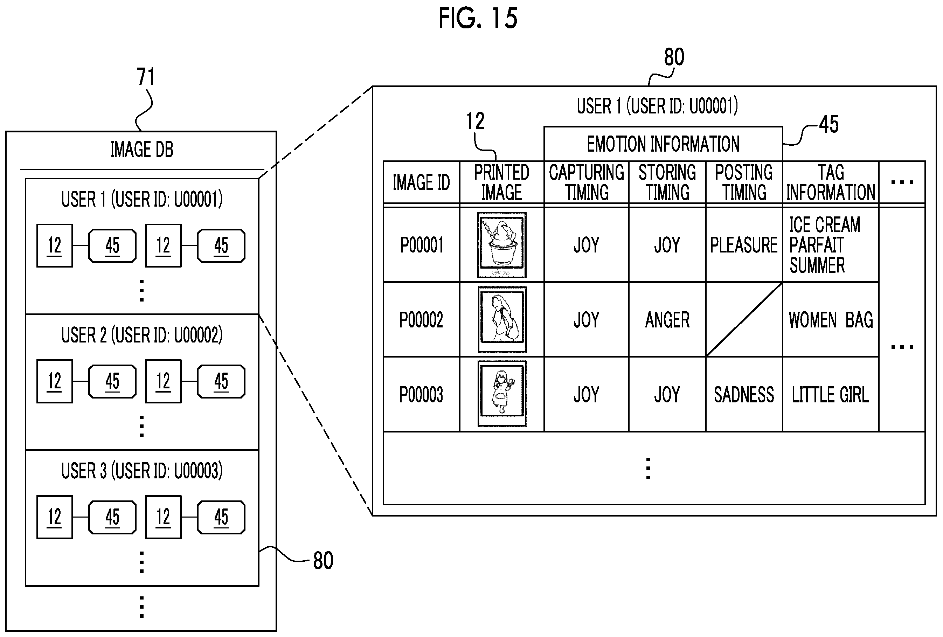

As shown in Fig. 15 as an example, the image DB 71 is provided with a storage area 80 for each user U. A user ID is registered in the storage area 80. In the storage area 80, the image of the instant film 11 stored as the digital image, that is, the printed image 12, and the emotion information 45 are stored in association with each other by the image ID. For the printed image 12 that is not posted on the SNS, such as the printed image 12 indicated by the image ID "P00002", the emotion at the posting timing is not registered.

Tag information is registered for each printed image 12. The tag information is a word that simply represents a subject appearing in the printed image 12. The tag information includes information that is manually input by the user U or information that is derived using image analysis software. In addition, although not shown, setting (macro, self-portrait, strobe imaging, or the like) of the instant camera 10 at the capturing timing, a scene (daytime, nighttime, outdoor, indoor, or the like) at the capturing timing, an image quality evaluation point, and the like are also registered for each printed image 12.

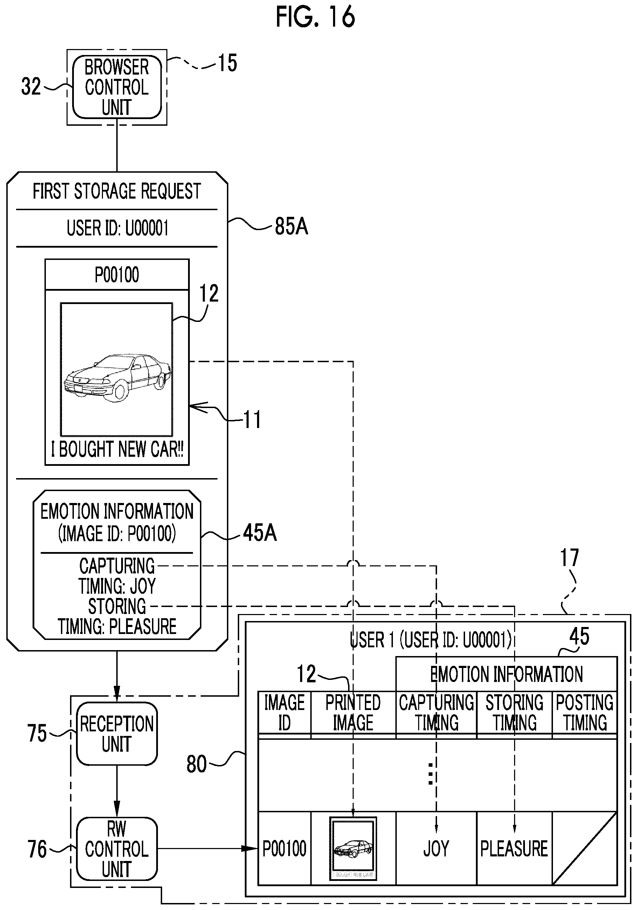

As shown in Fig. 16 as an example, in a case where the OK button 42 is pressed on the storage instruction screen 35, the browser control unit 32 generates the emotion information 45A as shown in Fig. 7, and then transmits a first storage request 85A to the image management server 17. The first storage request 85A includes the user ID, the image of the instant film 11 stored as the digital image, that is, the printed image 12, and the emotion information 45A.

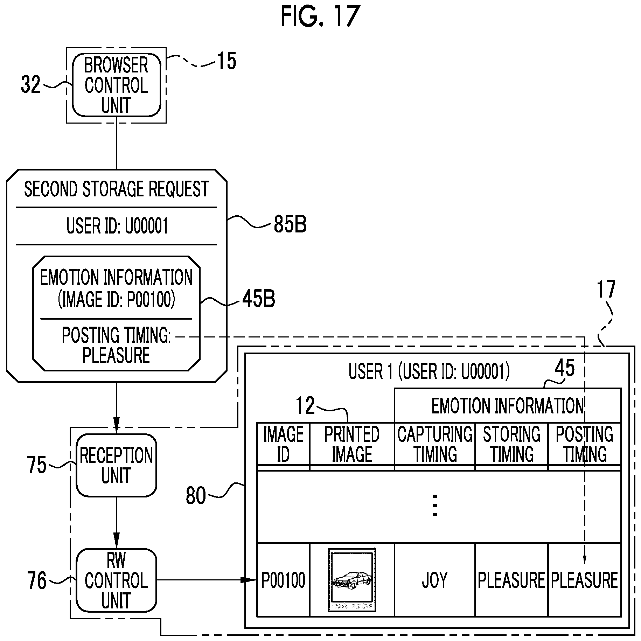

The reception unit 75 receives the first storage request 85A, and outputs the first storage request 85A to the RW control unit 76. The RW control unit 76 stores the printed image 12 and the emotion information 45A in the storage area 80 of the image DB 71 corresponding to the user ID in association with each other, in response to the first storage request 85A. Fig. 16 shows an example of storing the printed image 12 in which a vehicle appears, and the emotion "joy" at the capturing timing and the emotion "pleasure" at the storing timing, which are included in the emotion information 45A, in the storage area 80 of the user U having the user ID "U00001" in association with each other. It is noted that, in Fig. 16, the tag information and the like are not shown. The same applies to subsequent Fig. 17 and the like.

As shown in Fig. 17 as an example, in a case where the OK button 57 is pressed on the image reproduction/display screen 50, the browser control unit 32 generates the emotion information 45B as shown in Fig. 10, and then transmits a second storage request 85B to the image management server 17. The second storage request 85B includes the user ID and the emotion information 45B.

The reception unit 75 receives the second storage request 85B, and outputs the second storage request 85B to the RW control unit 76. The RW control unit 76 stores the emotion information 45B in the storage area 80 of the image DB 71 corresponding to the user ID, in response to the second storage request 85B. Fig. 17 shows an example of storing the printed image 12 in which a vehicle appears as in the case of Fig. 16, and the emotion "pleasure" at the posting timing that is included in the emotion information 45B in the storage area 80 of the user U having the user ID "U00001". As described above, the RW control unit 76 stores, in the image DB 71, the emotion information 45 and the printed image 12 at three timings of the capturing timing, the storing timing, and the posting timing in association with each other.

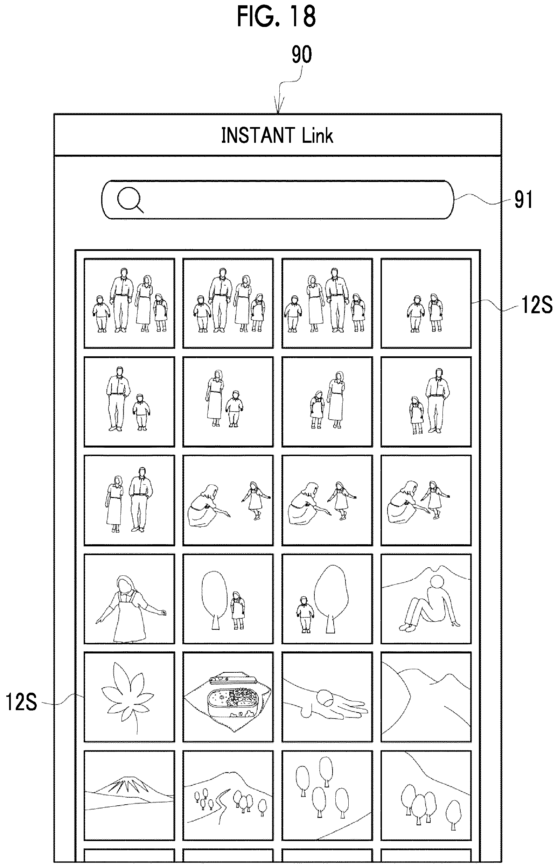

As shown in Fig. 18 as an example, the browser control unit 32 displays an image list display screen 90 on the display 24A in response to an instruction from the user U. On the image list display screen 90, thumbnail images 12S of the printed images 12 of the instant films 11 stored as the digital images are displayed in a list. In the image list display screen 90, in a case where the user U selects one thumbnail image 12S, the display transitions to the image reproduction/display screen 50 shown in Fig. 8.

A search bar 91 is provided on the image list display screen 90. The user U inputs a search keyword for searching for a desired printed image 12 to the search bar 91. As the search keyword, a certain word and words "joy", "anger", "sadness", and "pleasure" representing each emotion of the emotion information 45 can be input.

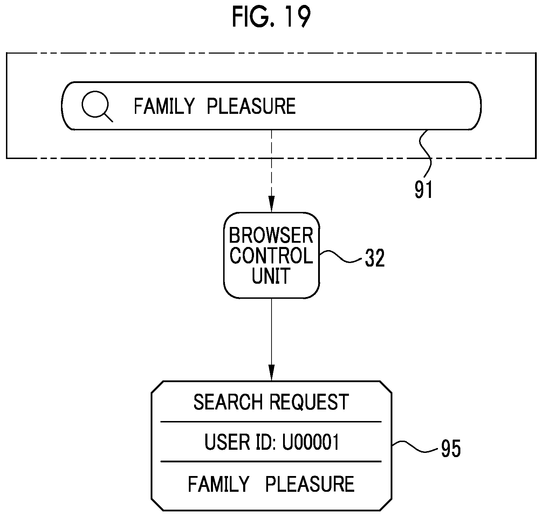

As shown in Fig. 19 as an example, in a case where a search keyword is input to the search bar 91, the browser control unit 32 generates a search request 95. The search request 95 includes the user ID and the search keyword that is input to the search bar 91. Fig. 19 shows an example in which a certain word "family" and an emotion word "pleasure" are input as the search keyword.

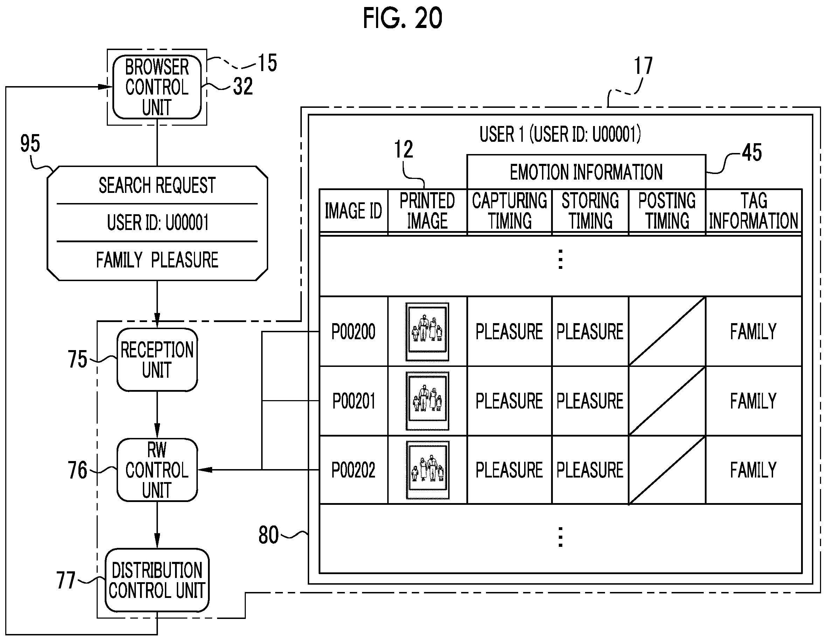

As shown in Fig. 20 as an example, the browser control unit 32 transmits the search request 95 to the image management server 17. The reception unit 75 receives the search request 95, and outputs the search request 95 to the RW control unit 76. The RW control unit 76 searches for the printed image 12 in which the emotion information 45 and the tag information match the search keyword among the printed images 12 stored in the storage area 80 of the image DB 71 corresponding to the user ID. The RW control unit 76 outputs, to the distribution control unit 77, the image ID of the printed image 12 that is searched for. The distribution control unit 77 distributes the image ID from the RW control unit 76 to the user terminal 15 that is a request source of the search request 95. The distribution control unit 77 specifies the user terminal 15 that is a request source of the search request 95 based on the user ID included in the search request 95. Fig. 20 shows an example in which the search keywords are the same as "family" and "pleasure" in Fig. 19. In addition, Fig. 20 shows an example of searching for three printed images 12 which have image IDs "P00200", "P00201", and "P00202" and in which "pleasure" is registered in the emotion information 45 and "family" is registered in the tag information.

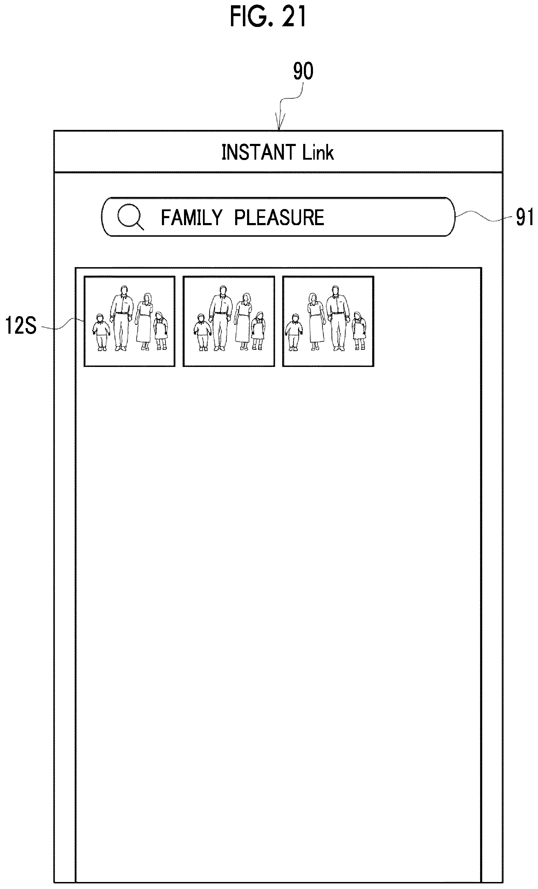

As shown in Fig. 21 as an example, the browser control unit 32 displays, as a search result, only the thumbnail image 12S of the printed image 12 having the image ID that is searched for by the RW control unit 76 and is distributed by the distribution control unit 77, on the image list display screen 90. As described above, the printed image 12 can be searched for by using the emotion information 45 as the search keyword. It is noted that AND search of a certain word and an emotion word has been exemplified here. On the other hand, the present disclosure is not limited thereto. It is also possible to search for the printed image 12 by using only a certain word as the search keyword, using only one emotion word as the search keyword, or using two or more emotion words as the search keyword.

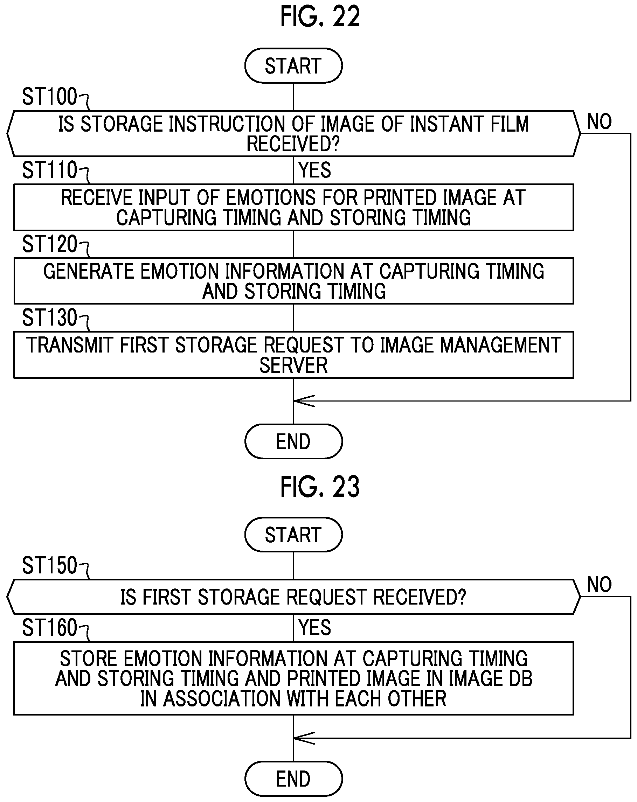

Next, an operation according to the above-described configuration will be described with reference to flowcharts shown in Figs. 22, 23, 24, and 25 as an example. As shown in Fig. 3, the CPU 22A of the user terminal 15 functions as the browser control unit 32 by activation of the printed image AP 30. In addition, as shown in Fig. 14, the CPU 22B of the image management server 17 functions as the reception unit 75, the RW control unit 76, and the distribution control unit 77 by activation of the operation program 70.

In order to store the image of the desired instant film 11 as a digital image, the user U causes the display 24A to display the storage instruction screen 35 shown in Fig. 4. In addition, the user U places, in the frame 36, the image of the instant film 11 to be stored as the digital image, and presses the storage instruction button 38. Thereby, the browser control unit 32 receives a storage instruction of the image of the instant film 11 (YES in step ST100 of Fig. 22). The browser control unit 32 performs transition of the display of the storage instruction screen 35 to a screen shown in Fig. 5.

The user U inputs an emotion at the capturing timing and an emotion at the storing timing by operating the emotion input menus 41A and 41B, and then presses the OK button 42. Thereby, an input of the emotions for the printed image 12 at the capturing timing and the storing timing is received by the browser control unit 32 (step ST110). As shown in Fig. 7, the emotion information 45A at the capturing timing and the storing timing is generated by the browser control unit 32 (step ST120). In addition, as shown in Fig. 16, the first storage request 85A including the emotion information 45A is transmitted to the image management server 17 under the control of the browser control unit 32 (step ST130).

In the image management server 17, the first storage request 85A is received by the reception unit 75 (YES in step ST150 of Fig. 23). The first storage request 85A is output from the reception unit 75 to the RW control unit 76. In addition, under the control of the RW control unit 76, the emotion information 45A at the capturing timing and the storing timing and the printed image 12 are stored in the image DB 71 in association with each other (step ST160).

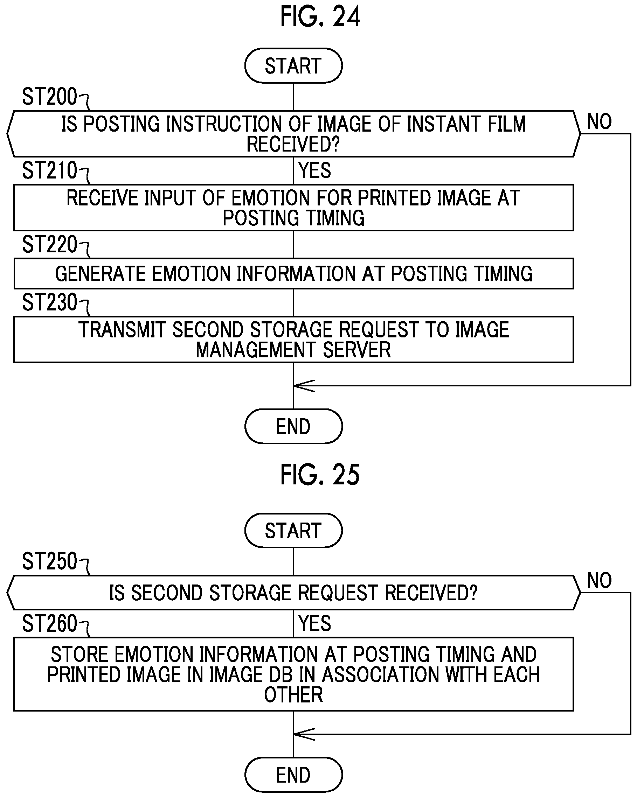

The user U causes the display 24A to display the image reproduction/display screen 50 shown in Fig. 8, in order to post the image of the desired instant film 11 on the SNS. In addition, the user U presses the posting button 52. Thereby, the browser control unit 32 receives a posting instruction of the image of the instant film 11 (YES in step ST200 of Fig. 24). The browser control unit 32 performs transition of the display of the image reproduction/display screen 50 to a screen shown in Fig. 9.

The user U inputs an emotion at the posting timing by operating the emotion input menu 41C, and then presses the OK button 57. Thereby, the browser control unit 32 receives an input of the emotion for the printed image 12 at the posting timing (step ST210). As shown in Fig. 10, the emotion information 45B at the posting timing is generated by the browser control unit 32 (step ST220). In addition, as shown in Fig. 17, a second storage request 85B including the emotion information 45B is transmitted to the image management server 17 under the control of the browser control unit 32 (step ST230).

In the image management server 17, the second storage request 85B is received by the reception unit 75 (YES in step ST250 of Fig. 25). The first storage request 85A is output from the reception unit 75 to the RW control unit 76. In addition, the emotion information 45B at the posting timing and the printed image 12 are stored in the image DB 71 in association with each other, under the control of the RW control unit 76 (step ST260).

As described above, the browser control unit 32 of the CPU 22A of the user terminal 15 receives the input of the emotions of the user U for the printed image 12 at a plurality of timings. The RW control unit 76 of the CPU 22B of the image management server 17 stores, in the image DB 71, the emotion information 45 at the plurality of timings and the printed image 12 in association with each other.

In JP2017-092528A, a timing at which the emotion of the user U for the printed image 12 is input is limited to a capturing timing. For this reason, it is not possible to accurately recognize the emotion of the user U for the printed image 12 because the emotion changes over time. On the other hand, in the technique of the present disclosure, as described above, the input of the emotion of the user U for the printed image 12 at the plurality of timings is received, and the emotion information 45 at the plurality of timings and the printed image 12 are stored in association with each other. Therefore, it is possible to more accurately recognize the emotion of the user U for the printed image 12.

The image is a printed image 12 printed and output on the instant film 11. In addition, the plurality of timings include the timing (capturing timing) at which the printed image 12 is captured, the timing (storing timing) at which the image of the instant film 11 is stored as a digital image, and the timing (posting timing) at which the digital image of the instant film 11 is posted on the SNS. Therefore, it is possible to accurately recognize the emotion of the user U for the printed image 12 at the capturing timing, the storing timing, and the posting timing. It is noted that the plurality of timings are not limited to all of the capturing timing, the storing timing, and the posting timing, and may be a combination selected from these timings (for example, the capturing timing and the storing timing, or the storing timing and the posting timing).

As shown in Fig. 8 and Figs. 11 to 13, the browser control unit 32 applies a display effect according to the emotion information 45 in a case of displaying the printed image 12. Therefore, the emotion of the user U for the printed image 12 can be understood at a glance. Further, the display of the printed image 12, which tends to be uninteresting, can be made more interesting. It is noted that, in addition to the display effect, music according to the emotion information 45 may be played.

As shown in Figs. 18 to 21, it is possible to search for the printed image 12 by using the emotion information 45 as a search keyword. Therefore, it is possible to search for the printed image 12 that better matches the intention of the user U.

### [Second Embodiment]

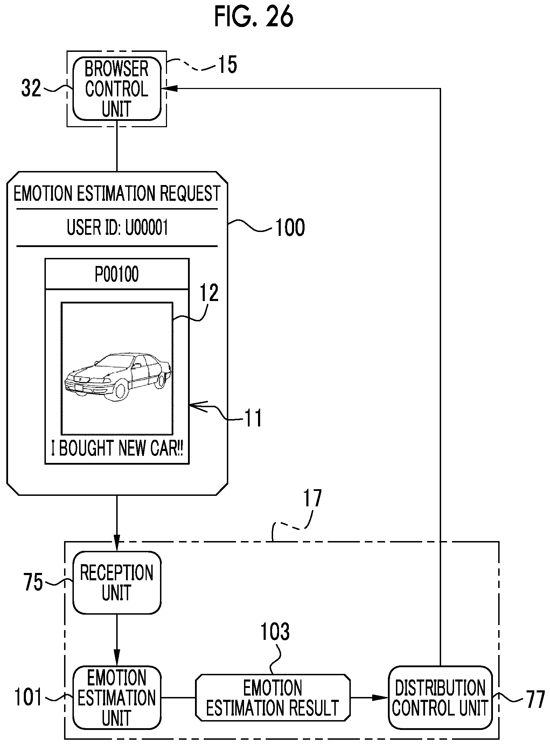

As shown in Fig. 26 as an example, in the present embodiment, in a case where the storage instruction button 38 is pressed on the storage instruction screen 35 shown in Fig. 4, and in a case where the posting button 52 is pressed on the image reproduction/display screen 50 shown in Fig. 8, the browser control unit 32 transmits an emotion estimation request 100 to the image management server 17. The emotion estimation request 100 includes the user ID and the image of the instant film 11 stored as the digital image, that is, the printed image 12. It is noted that the printed image 12 is an image in which a vehicle shown in Fig. 16 appears.

The CPU 22B of the image management server 17 of the present embodiment functions as an emotion estimation unit 101 in addition to the processing units 75 to 77 of the first embodiment (the RW control unit 76 is not shown in Fig. 26).

The reception unit 75 receives the emotion estimation request 100, and outputs the emotion estimation request 100 to the emotion estimation unit 101. The emotion estimation unit 101 estimates an emotion of the user U for the printed image 12, in response to the emotion estimation request 100. The emotion estimation unit 101 outputs an emotion estimation result 103, which is a result obtained by estimating the emotion of the user U for the printed image 12, to the distribution control unit 77. The distribution control unit 77 distributes the emotion estimation result 103 to the user terminal 15 that is a request source of the emotion estimation request 100.

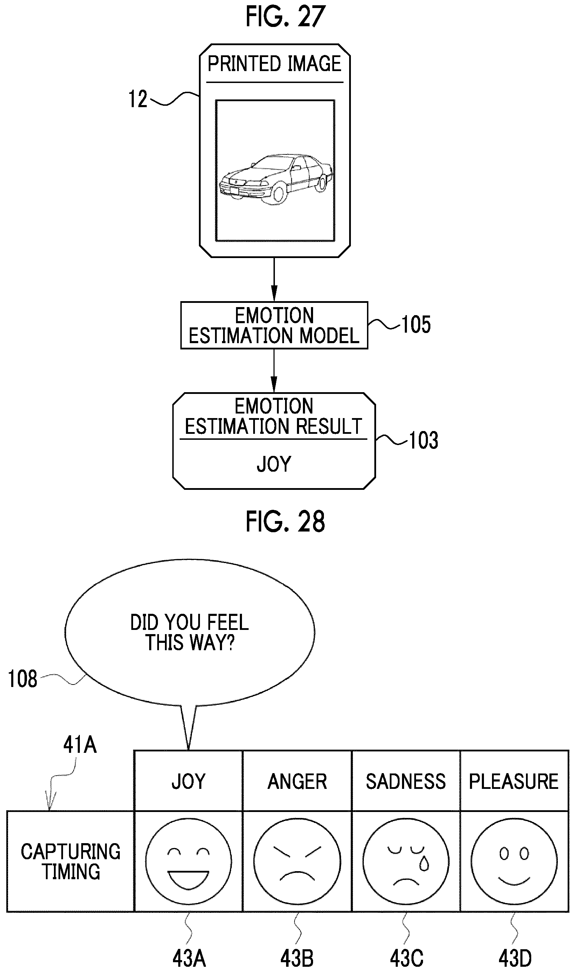

As shown in Fig. 27 as an example, the emotion estimation unit 101 estimates an emotion of the user U for the printed image 12 by using an emotion estimation model 105. The emotion estimation model 105 is stored in the storage 20B. The emotion estimation model 105 is read from the storage 20B by the RW control unit 76, and is output to the emotion estimation unit 101. The emotion estimation model 105 is configured by, for example, a convolutional neural network. The emotion estimation model 105 is an example of a "machine learning model" according to the technique of the present disclosure.

The emotion estimation unit 101 inputs the printed image 12 corresponding to the emotion estimation request 100 to the emotion estimation model 105, and causes the emotion estimation model 105 to output an emotion estimation result 103 of the user U for the printed image 12. Fig. 27 shows an example in which the emotion of the user U for the printed image 12 is estimated as "joy".

In a case where the emotion estimation result 103 from the distribution control unit 77 is received, as shown in Fig. 28 as an example, the browser control unit 32 displays, in the emotion input menu 41, a balloon message 108 at an upper portion of the face type 43 corresponding to the emotion of the emotion estimation result 103. The balloon message 108 is content for showing the emotion estimated by the emotion estimation model 105 to the user U, such as "Did you feel this way?". Fig. 28 shows an example in which, in the emotion input menu 41A at the capturing timing, a balloon message 108 is displayed at an upper portion of the face type 43A representing "joy" as an emotion corresponding to the emotion of the emotion estimation result 103. It is noted that, although not shown, the browser control unit 32 also displays, in the emotion input menu 41B at the storing timing and the emotion input menu 41C at the posting timing, the balloon message 108 at an upper portion of the face type 43 corresponding to the emotion of the emotion estimation result 103.

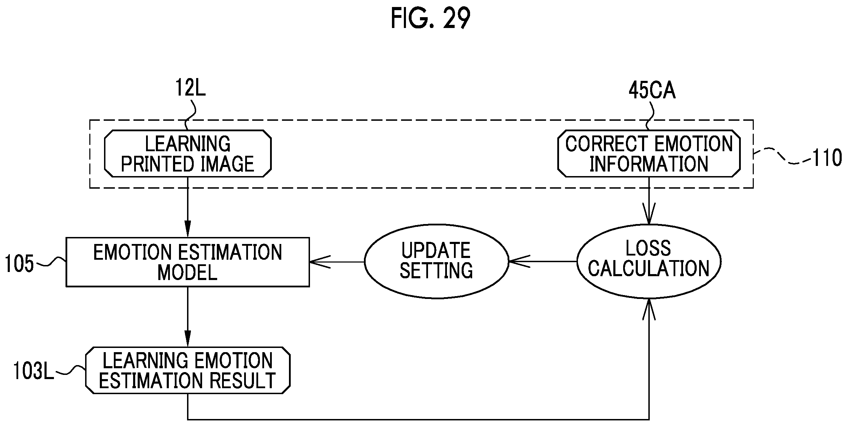

As shown in Fig. 29 as an example, the emotion estimation model 105 is trained by using given training data 110. The training data 110 is a set of a learning printed image 12L and correct emotion information 45CA.

In a learning phase, the learning printed image 12L is input to the emotion estimation model 105. The emotion estimation model 105 outputs a learning emotion estimation result 103L in response to an input of the learning printed image 12L. A loss calculation of the emotion estimation model 105 using a loss function is performed based on the learning emotion estimation result 103L and the correct emotion information 45CA. In addition, update setting of various coefficients of the emotion estimation model 105 is performed according to a result of the loss calculation, and the emotion estimation model 105 is updated according to the update setting.

In the learning phase, a series of processing of inputting the learning printed image 12L to the emotion estimation model 105, outputting the learning emotion estimation result 103L from the emotion estimation model 105, performing the loss calculation, performing the update setting, and updating the emotion estimation model 105 is repeatedly performed while exchanging the training data 110. The repetition of the series of processing is ended in a case where the estimation accuracy of the learning emotion estimation result 103L with respect to the correct emotion information 45CA reaches a predetermined setting level. The emotion estimation model 105 of which the estimation accuracy reaches the setting level in this way is stored in the storage 20B, and is used in the emotion estimation unit 101. It is noted that the learning may be ended in a case where the series of processing is repeated a set number of times, regardless of the estimation accuracy of the learning emotion estimation result 103L with respect to the correct emotion information 45CA.

As described above, in the second embodiment, the emotion estimation unit 101 estimates an emotion by using the emotion estimation model 105 that outputs the emotion estimation result 103 in response to the input of the printed image 12. The browser control unit 32 displays the balloon message 108, and thus, the emotion estimated by the emotion estimation unit 101 is displayed for the user U. The machine learning model such as the emotion estimation model 105 has been widely used in recent years, and the estimation accuracy of the machine learning model has also improved. Therefore, it is possible to support an input of a more appropriate emotion.

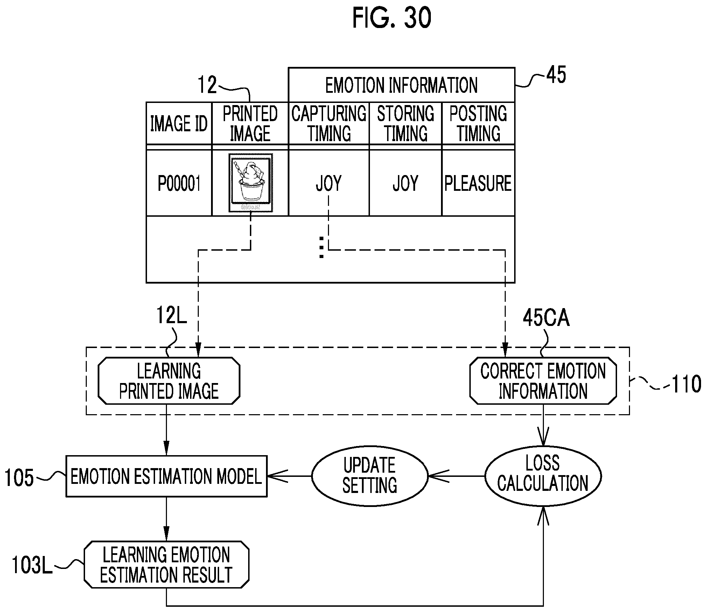

It is noted that, as shown in Fig. 30 as an example, the printed image 12 and the emotion information 45 stored in the image DB 71 in association with each other may be used as the training data 110 of the emotion estimation model 105. Specifically, the printed image 12 stored in the image DB 71 is used as the learning printed image 12L, and the emotion information 45 at the capturing timing that is stored in the image DB 71 is used as the correct emotion information 45CA. Here, the reason why the emotion information 45 at the capturing timing is used as the correct emotion information 45CA is that the emotion of the user U for the printed image 12 is honestly expressed as compared with the emotions at the storing timing and the posting timing. In this way, the printed image 12 and the emotion information 45 stored in the image DB 71 can be effectively utilized. It is not necessary to prepare the learning printed image 12L and the correct emotion information 45CA again for the training data 110. In addition, it is possible to reduce a concern about a shortage of the training data 110, and it is possible to prevent a risk of overlearning of the emotion estimation model 105 due to the shortage of the training data 110.

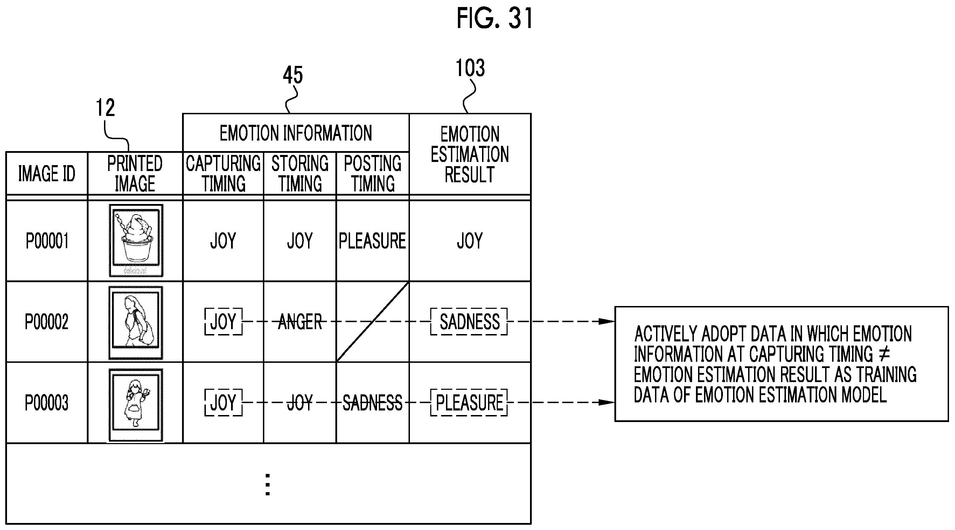

In a case where the printed image 12 and the emotion information 45 stored in the image DB 71 in association with each other are used as the training data 110 of the emotion estimation model 105, as shown in Fig. 31 as an example, the emotion estimation result 103 is also stored in the image DB 71 in association with the printed image 12 and the emotion information 45. In addition, it is preferable to actively adopt data in which the emotion information 45 at the capturing timing and the emotion estimation result 103 are different from each other (in Fig. 31, the emotion information at the capturing timing ≠ the emotion estimation result), as the training data 110 of the emotion estimation model 105. The data in which the emotion information 45 at the capturing timing and the emotion estimation result 103 are different from each other is data obtained by erroneous emotion estimation of the emotion estimation model 105. Therefore, in a case where the data in which the emotion information 45 at the capturing timing and the emotion estimation result 103 are different from each other is actively adopted as the training data 110 of the emotion estimation model 105, the estimation accuracy of the emotion estimation model 105 can be improved.

The learning of the emotion estimation model 105 may be performed by the image management server 17, or may be performed by another device other than the image management server 17. In addition, the learning of the emotion estimation model 105 may be continuously performed after the emotion estimation model 105 is stored in the storage 20B.

### [Third Embodiment]

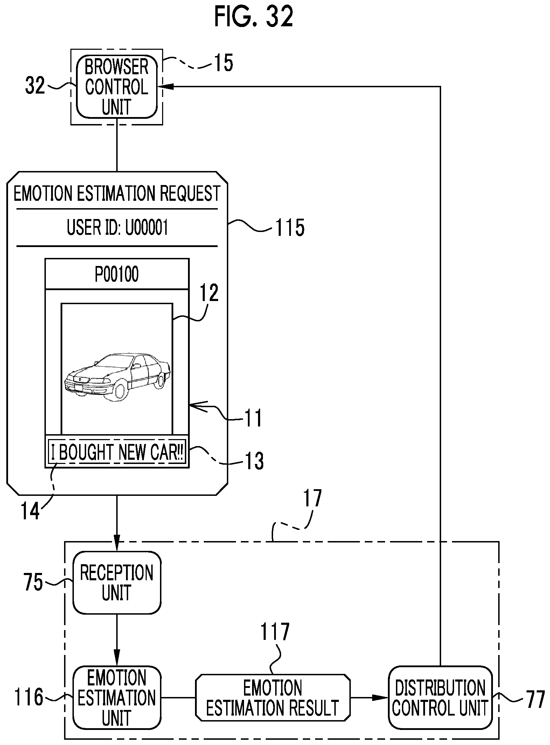

As shown in Fig. 32 as an example, in the present embodiment, in a case where the storage instruction button 38 is pressed on the storage instruction screen 35 shown in Fig. 4, the browser control unit 32 transmits an emotion estimation request 115 to the image management server 17. The emotion estimation request 115 includes the user ID and the image of the instant film 11 stored as the digital image, that is, the printed image 12. It is noted that, as in the case of Fig. 16, Fig. 32 shows an example in which the printed image 12 is an image in which a vehicle appears and a text 14 such as "I bought a new car!!" is written in a margin 13 by the user U.

The CPU 22B of the image management server 17 of the present embodiment functions as an emotion estimation unit 116 in addition to the processing units 75 to 77 of the first embodiment (the RW control unit 76 is not shown in Fig. 32).

The reception unit 75 receives the emotion estimation request 115, and outputs the emotion estimation request 115 to the emotion estimation unit 116. The emotion estimation unit 116 estimates an emotion of the user U for the printed image 12 at the capturing timing, in response to the emotion estimation request 115. The emotion estimation unit 116 outputs an emotion estimation result 117, which is a result obtained by estimating an emotion of the user U for the printed image 12 at the capturing timing, to the distribution control unit 77. The distribution control unit 77 distributes the emotion estimation result 117 to the user terminal 15 that is a request source of the emotion estimation request 115.

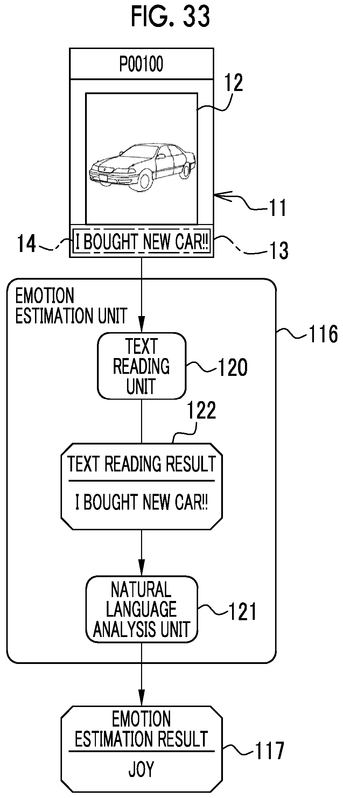

As shown in Fig. 33 as an example, the emotion estimation unit 116 includes a text reading unit 120 and a natural language analysis unit 121. The image of the instant film 11 corresponding to the emotion estimation request 115 is input to the text reading unit 120. The text reading unit 120 reads the text 14, which is actually written in the margin 13 or the like of the instant film 11 by the user U, by performing image analysis on the image of the instant film 11 stored as a digital image. The text reading unit 120 outputs a text reading result 122, which is a result obtained by reading the text 14, to the natural language analysis unit 121.

The natural language analysis unit 121 performs natural language analysis on the text 14 of the text reading result 122. The natural language analysis unit 121 estimates an emotion of the user U for the printed image 12 at the capturing timing based on the result of the natural language analysis, and outputs an emotion estimation result 117. The natural language analysis unit 121 estimates an emotion of the user U for the printed image 12 at the capturing timing by using, for example, the emotion estimation model that outputs the emotion estimation result 117 in response to the input of the result of the natural language analysis. Here, the natural language analysis performed by the natural language analysis unit 121 includes morphological analysis, syntactic analysis, semantic analysis, contextual analysis, and the like. Fig. 33 shows an example in which the text 14 such as "I bought a new car!!" is read by the text reading unit 120 and the emotion of the user U for the printed image 12 at the capturing timing is estimated as "joy".

Although not shown, in a case where the emotion estimation result 117 from the distribution control unit 77 is received, the browser control unit 32 displays, in the emotion input menu 41A, the balloon message 108 at an upper portion of the face type 43 corresponding to the emotion of the emotion estimation result 117, as in a case shown in Fig. 28.

As described above, in the third embodiment, the text reading unit 120 of the emotion estimation unit 116 reads the text 14, which is actually written in the instant film 11 by the user U, by performing image analysis on the image of the instant film 11 stored as the digital image. The natural language analysis unit 121 of the emotion estimation unit 116 performs natural language analysis on the text 14, and estimates an emotion of the user U for the printed image 12 at the capturing timing based on a result of the natural language analysis. The browser control unit 32 displays the balloon message 108, and thus, the emotion estimated by the emotion estimation unit 116 is displayed for the user U. Therefore, it is possible to support the user U in inputting the emotion that is suitable for the text 14 which is actually written in the instant film 11.

### [Fourth Embodiment]

In the present embodiment, in a case where the posting button 52 is pressed on the image reproduction/display screen 50 shown in Fig. 8, the browser control unit 32 receives a text 125 that is input by the user U. The text 125 is an explanation or the like attached to the image of the instant film 11 in a case where the image of the instant film 11 is posted on the SNS. The browser control unit 32 receives the input of the text 125, and then performs transition of the display of the image reproduction/display screen 50 to a screen shown in Fig. 9.

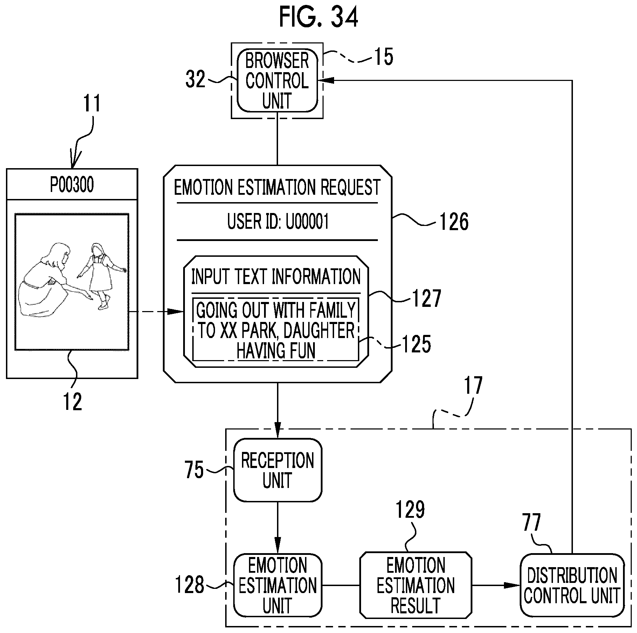

As shown in Fig. 34 as an example, in the present embodiment, in a case where the text 125 that is input by the user U is received, the browser control unit 32 transmits an emotion estimation request 126 to the image management server 17. The emotion estimation request 126 includes the user ID and input text information 127. The input text information 127 includes the text 125. It is noted that the printed image 12 is an image in which a mother and a daughter playing in a park appear, and that a text 125 such as "going out with family to XX park, daughter having fun" is written by the user U.

The CPU 22B of the image management server 17 of the present embodiment functions as an emotion estimation unit 128 in addition to the processing units 75 to 77 of the first embodiment (the RW control unit 76 is not shown in Fig. 34).

The reception unit 75 receives the emotion estimation request 126, and outputs the emotion estimation request 126 to the emotion estimation unit 128. The emotion estimation unit 128 estimates an emotion of the user U for the printed image 12 at the posting timing, in response to the emotion estimation request 126. The emotion estimation unit 128 outputs an emotion estimation result 129, which is a result obtained by estimating an emotion of the user U for the printed image 12 at the posting timing, to the distribution control unit 77. The distribution control unit 77 distributes the emotion estimation result 129 to the user terminal 15 that is a request source of the emotion estimation request 126.

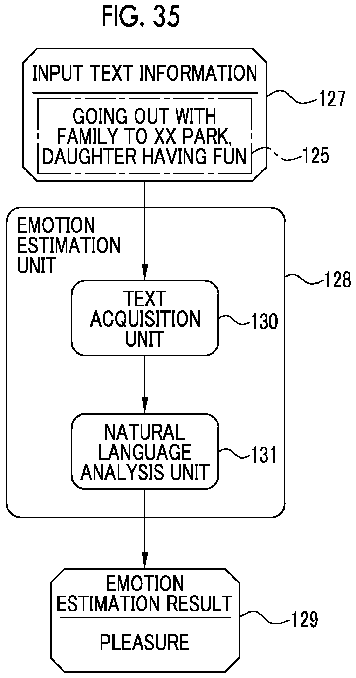

As shown in Fig. 35 as an example, the emotion estimation unit 128 includes a text acquisition unit 130 and a natural language analysis unit 131. The input text information 127 of the emotion estimation request 126 is input to the text acquisition unit 130. The text acquisition unit 130 outputs the input text information 127 to the natural language analysis unit 131.

The natural language analysis unit 131 performs natural language analysis on the text 125. The natural language analysis unit 131 estimates an emotion of the user U for the printed image 12 at the posting timing based on the result of the natural language analysis, and outputs an emotion estimation result 129. Similar to the natural language analysis unit 121, the natural language analysis unit 131 estimates an emotion of the user U for the printed image 12 at the posting timing by using, for example, the emotion estimation model that outputs the emotion estimation result 129 in response to the input of the result of the natural language analysis. The natural language analysis performed by the natural language analysis unit 131 also includes morphological analysis, syntactic analysis, semantic analysis, contextual analysis, and the like, as in the natural language analysis performed by the natural language analysis unit 121. Fig. 35 shows an example in which the emotion of the user U for the printed image 12 at the posting timing is estimated as "pleasure" from the text 125 such as "going out with family to XX park, daughter having fun".

Although not shown, in a case where the emotion estimation result 129 from the distribution control unit 77 is received, the browser control unit 32 displays, in the emotion input menu 41C, the balloon message 108 at an upper portion of the face type 43 corresponding to the emotion of the emotion estimation result 129, as in a case shown in Fig. 28.

As described above, in the fourth embodiment, the text acquisition unit 130 of the emotion estimation unit 128 acquires the text 125 that is input by the user U in a case where the image of the instant film 11 stored as the digital image is posted on the SNS, by acquiring the input text information 127. The natural language analysis unit 131 of the emotion estimation unit 128 performs natural language analysis on the text 125, and estimates an emotion of the user U for the printed image 12 at the posting timing based on a result of the natural language analysis. The browser control unit 32 displays the balloon message 108, and thus, the emotion estimated by the emotion estimation unit 128 is displayed for the user U. Therefore, it is possible to support the user U in inputting the emotion that is suitable for the text 125 which is input in a case where the user U posts the image of the instant film 11 on the SNS.

### [Fifth Embodiment]

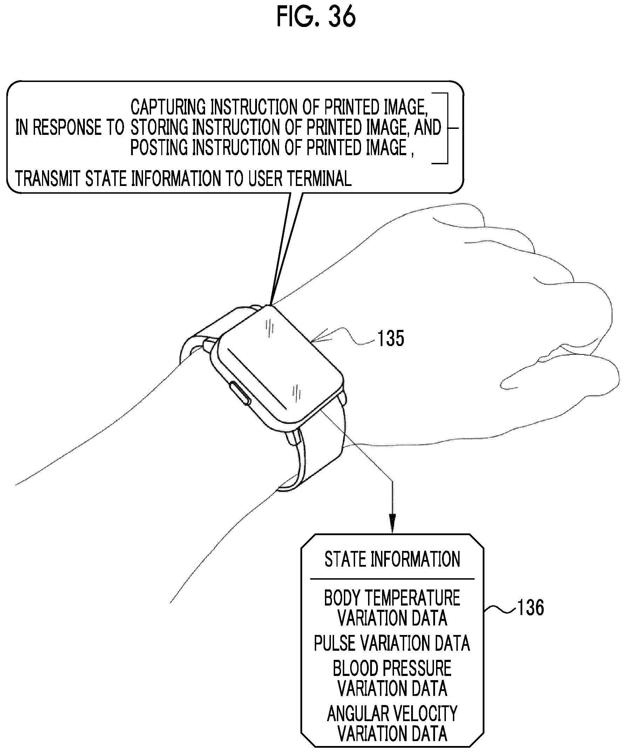

As shown in Fig. 36 as an example, in the present embodiment, state information 136 of the user U that is output from a smart watch 135 attached to the wrist of the user U is used to estimate an emotion of the user U. The smart watch 135 is an example of a "wearable device" according to the technique of the present disclosure.

The smart watch 135 is connected to the instant camera 10 and the user terminal 15 via short-range wireless communication such as Bluetooth (registered trademark) such that mutual communication can be performed. The smart watch 135 operates in response to the instant camera 10 and the user terminal 15. More specifically, the smart watch 135 transmits the state information 136 to the user terminal 15 in response to an instruction for causing the instant camera 10 to capture the printed image 12, an instruction for causing the user terminal 15 to store the printed image 12 in a case where the storage instruction button 38 is pressed, and an instruction for causing the user terminal 15 to post the printed image 12 in a case where the posting button 52 is pressed.

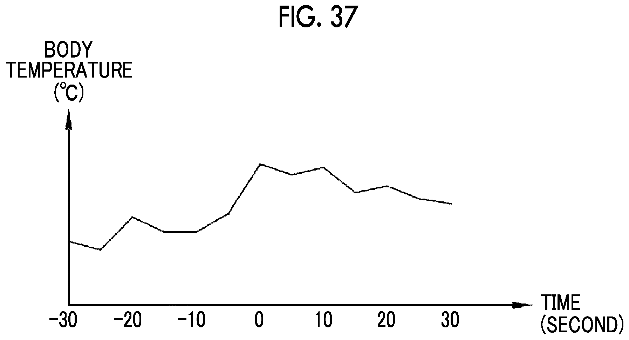

The state information 136 includes body temperature variation data, pulse variation data, blood pressure variation data, and angular velocity variation data. As shown in Fig. 37 as an example, the body temperature variation data is time-series data indicating a variation in the body temperature of the user U for 30 seconds before and after a timing (0 second) when the capturing instruction, the storage instruction, or the posting instruction of the printed image 12 is issued. Although not shown, the pulse variation data, the blood pressure variation data, and the angular velocity variation data are also time-series data indicating variations in the pulse, the blood pressure, and the angular velocity of the user U for 30 seconds before and after a timing when the capturing instruction, the storage instruction, or the posting instruction of the printed image 12 is issued, similarly to the body temperature variation data. According to the angular velocity variation data, it is possible to recognize a state of the camera shake of the user U in a case where the capturing instruction, the storage instruction, or the posting instruction of the printed image 12 is issued.

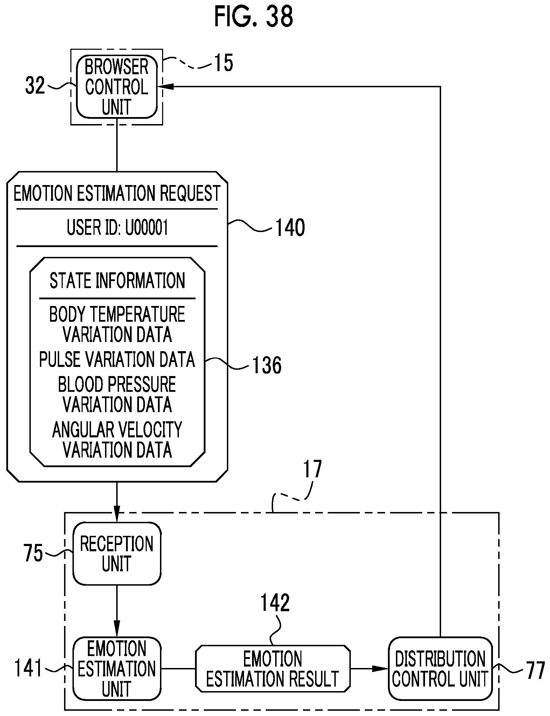

As shown in Fig. 38 as an example, in the present embodiment, in a case where the state information 136 from the smart watch 135 is received, the browser control unit 32 transmits an emotion estimation request 140 to the image management server 17. The emotion estimation request 140 includes the user ID and the state information 136.

The CPU 22B of the image management server 17 of the present embodiment functions as an emotion estimation unit 141 in addition to the processing units 75 to 77 of the first embodiment (the RW control unit 76 is not shown in Fig. 38).

The reception unit 75 receives the emotion estimation request 140, and outputs the emotion estimation request 140 to the emotion estimation unit 141. The emotion estimation unit 141 estimates an emotion of the user U for the printed image 12 at the capturing timing, the storing timing, or the posting timing in response to the emotion estimation request 140. The emotion estimation unit 141 outputs an emotion estimation result 142, which is a result obtained by estimating the emotion of the user U for the printed image 12, to the distribution control unit 77. The distribution control unit 77 distributes the emotion estimation result 142 to the user terminal 15 that is a request source of the emotion estimation request 140. The emotion estimation unit 141 estimates an emotion of the user U for the printed image 12 by using, for example, the emotion estimation model that outputs an emotion estimation result 142 in response to the input of the state information 136.

Although not shown, in a case where the emotion estimation result 142 from the distribution control unit 77 is received, the browser control unit 32 displays, in the emotion input menu 41, the balloon message 108 at an upper portion of the face type 43 corresponding to the emotion of the emotion estimation result 142, as in a case shown in Fig. 28.

As described above, in the fifth embodiment, the emotion estimation unit 141 acquires the state information 136 of the user U from the smart watch 135 attached to the wrist of the user U, and estimates an emotion of the user U for the printed image 12 based on the state information 136. The browser control unit 32 displays the balloon message 108, and thus, the emotion estimated by the emotion estimation unit 141 is displayed for the user U. Therefore, it is possible to support the user U in inputting the emotion that is suitable for the state information 136 of the user U.

The wearable device is not limited to the smart watch 135 as an example. The wearable device may be worn around the head of the user U or may be built in clothing worn by the user U. Further, in addition to or instead of the body temperature variation data or the like, respiratory variation data or the like may be used as the state information 136.

### [Sixth Embodiment]

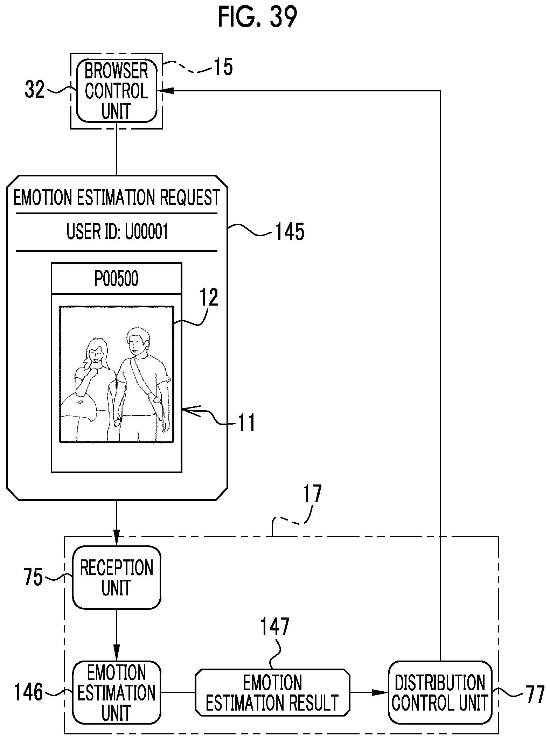

As shown in Fig. 39 as an example, in the present embodiment, in a case where the storage instruction button 38 is pressed on the storage instruction screen 35 shown in Fig. 4, the browser control unit 32 transmits an emotion estimation request 145 to the image management server 17. The emotion estimation request 145 includes the user ID and the image of the instant film 11 stored as the digital image, that is, the printed image 12. It is noted that the printed image 12 shows a couple with smiling faces.

The CPU 22B of the image management server 17 of the present embodiment functions as an emotion estimation unit 146 in addition to the processing units 75 to 77 of the first embodiment (the RW control unit 76 is not shown in Fig. 39).

The reception unit 75 receives the emotion estimation request 145, and outputs the emotion estimation request 145 to the emotion estimation unit 146. The emotion estimation unit 146 estimates an emotion of the user U for the printed image 12 at the capturing timing, in response to the emotion estimation request 145. The emotion estimation unit 146 outputs an emotion estimation result 147, which is a result obtained by estimating an emotion of the user U for the printed image 12 at the capturing timing, to the distribution control unit 77. The distribution control unit 77 distributes the emotion estimation result 147 to the user terminal 15 that is a request source of the emotion estimation request 145.

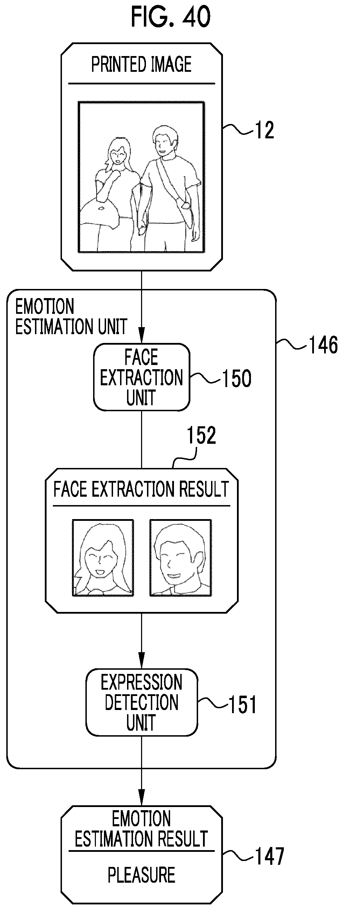

As shown in Fig. 40 as an example, the emotion estimation unit 146 includes a face extraction unit 150 and an expression detection unit 151. The printed image 12 of the emotion estimation request 145 is input to the face extraction unit 150. The face extraction unit 150 extracts a face of a person appearing in the printed image 12 by using a well-known face extraction technique. The face extraction unit 150 outputs a face extraction result 152, which is a result obtained by extracting a face, to the expression detection unit 151.

The expression detection unit 151 detects an expression of the face of the person in the face extraction result 152 by using a well-known image recognition technique. The expression detection unit 151 estimates an emotion of the user U for the printed image 12 at the capturing timing based on the detection result of the expression, and outputs an emotion estimation result 147. The expression detection unit 151 estimates an emotion of the user U for the printed image 12 at the capturing timing by using, for example, the emotion estimation model that outputs the emotion estimation result 147 in response to the input of the detection result of the expression. Fig. 40 shows an example in which the emotion of the user U for the printed image 12 at the capturing timing is estimated as "pleasure" from the face extraction result 152 of the couple with smiling faces.

Although not shown, in a case where the emotion estimation result 147 from the distribution control unit 77 is received, the browser control unit 32 displays, in the emotion input menu 41A, the balloon message 108 at an upper portion of the face type 43 corresponding to the emotion of the emotion estimation result 147, as in a case shown in Fig. 28.

As described above, in the sixth embodiment, the expression detection unit 151 of the emotion estimation unit 146 detects the expression of the person appearing in the printed image 12, and estimates the emotion of the user U for the printed image 12 based on the detection result of the expression. The browser control unit 32 displays the balloon message 108, and thus, the emotion estimated by the emotion estimation unit 146 is displayed for the user U. Therefore, it is possible to support the user U in inputting the emotion that is suitable for the expression of the person appearing in the printed image 12.

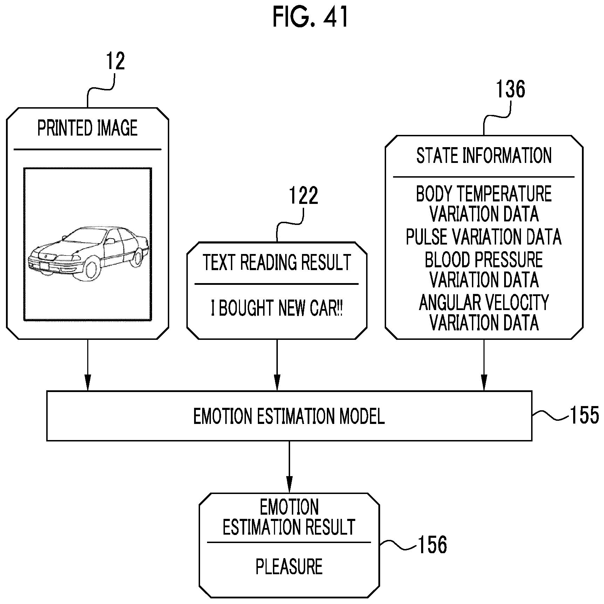

The second to sixth embodiments may be implemented alone or in combination. For example, in a case where the second, third, and fifth embodiments are implemented in combination, the emotion estimation model 155 shown in Fig. 41 may be used as an example. The emotion estimation model 155 outputs an emotion estimation result 156 in response to the input of the printed image 12, the text reading result 122, and the state information 136. The emotion estimation model 155 is an example of a "machine learning model" according to the technique of the present disclosure. In this manner, the number of materials for estimating the emotion of the user U for the printed image 12 is increased as compared with a case where the second, third, and fifth embodiments are implemented alone, and thus, the estimation accuracy of the emotion estimation result 156 can be further improved.

The emotions estimated by the emotion estimation units 101, 116, 128, 141, and 146 in the second to sixth embodiments may be stored as the emotion information 45. In addition, the stored emotion information 45 may be presented to the user U, and a correction instruction for the emotion information 45 may be received from the user U.

Although each of the above-described embodiments adopts the configuration in which the user U is almost forced to input the emotion for the printed image 12 at the capturing timing, the storing timing, and the posting timing, the present disclosure is not limited thereto. It is sufficient to adopt a configuration in which the input of the emotion for the printed image 12 at the capturing timing, the storing timing, and the posting timing can be received, and it is not necessary to force the user U to input the emotion. In addition, it is not necessary to secure a storage area for the emotion information 45 in the image DB 71 in advance. The storage area for the emotion information 45 may be secured in the image DB 71 each time the input of the emotion is received.

It is noted that the emotion is not limited to the examples of "joy", "anger", "sadness", and "pleasure". The emotion may include "nostalgic", "lovely", "frightening", "happy", and the like. In addition, the image is not limited to the printed image 12, and may be a digital image captured by a device having a camera function.

The timing is not limited to the capturing timing, the storing timing, and the posting timing described in the examples. The timing may be a regular timing such as one year after capturing, two years after capturing, five years after capturing, or ten years after capturing.

The image management server 17 may be caused to perform all or a part of the functions of the browser control unit 32 of the user terminal 15. Specifically, various screens, such as the storage instruction screen 35, are generated in the image management server 17, and are distributed and output to the user terminal 15 in a format of screen data for web distribution that is created by a markup language such as extensible markup language (XML). In this case, the browser control unit 32 of the user terminal 15 represents various screens to be displayed on the web browser based on the screen data, and displays various screens on the display 24A. It is noted that, instead of XML, another data description language, such as JavaScript (registered trademark) Object Notation (JSON), may be used.

It is possible to modify a hardware configuration of the computer constituting the image management server 17 in various ways. For example, the image management server 17 can be configured by using a plurality of computers separated as hardware for the purpose of improving processing ability and reliability. For example, the functions of the reception unit 75 and the RW control unit 76 and the function of the distribution control unit 77 are distributed to two computers. In this case, the image management server 17 is configured by using two computers. In addition, the user terminal 15 may be caused to perform all or a part of the functions of the image management server 17.

As described above, the hardware configurations of the computers of the user terminal 15 and the image management server 17 can be appropriately changed according to required performance such as processing ability, safety, and reliability. Further, it is also needless to say that, in addition to the hardware, the APs, such as the printed image AP 30 and the operation program 70, can also be duplicated or distributed and stored in a plurality of storages for the purpose of securing the safety and the reliability.

In each of the above-described embodiments, for example, the following various processors can be used as a hardware structure of processing units that execute various types of processing, such as the browser control unit 32, the reception unit 75, the RW control unit 76, the distribution control unit 77, the emotion estimation units 101, 116, 128, 141, and 146, the text reading unit 120, the natural language analysis units 121 and 131, the text acquisition unit 130, the face extraction unit 150, and the expression detection unit 151. The various processors include, for example, the CPUs 22A and 22B which are general-purpose processors executing software (the printed image AP 30 and the operation program 70) to function as various processing units, a programmable logic device (PLD), such as a field programmable gate array (FPGA), which is a processor of which the circuit configuration can be changed after manufacture, and/or a dedicated electric circuit, such as an application specific integrated circuit (ASIC), which is a processor having a dedicated circuit configuration designed to execute specific processing.

One processing unit may be configured by one of these various processors, or may be configured by a combination of two or more processors having the same type or different types (for example, a combination of a plurality of FPGAs and/or a combination of a CPU and an FPGA). In addition, a plurality of processing units may be configured by one processor.

As an example in which the plurality of processing units are configured by one processor, firstly, as represented by a computer such as a client and a server, a form in which one processor is configured by a combination of one or more CPUs and software and the processor functions as the plurality of processing units may be adopted. Secondly, as represented by system on chip (SoC), there is a form in which a processor that realizes the functions of the entire system including a plurality of processing units with one integrated circuit (IC) chip is used. In this way, various processing units are formed using one or more of the above-mentioned various processors as hardware structures.

Furthermore, more specifically, an electric circuit (circuitry) in which circuit elements such as semiconductor elements are combined can be used as the hardware structure of the various processors.

It is possible to understand the techniques described in following Appendices from the above description.

### [Appendix 1]

An image processing device comprising:
a processor, in which
the processor is configured to:
   receive an input of an emotion of a user for an image at a plurality of timings; and
   store information of the emotion at the plurality of timings and the image in association with each other.

### [Appendix 2]

The image processing device according to Appendix 1, in which
the image is a printed image printed and output on an instant film, and
the plurality of timings are a combination selected from a timing at which the printed image is captured, a timing at which an image of the instant film is stored as a digital image, and a timing at which the digital image of the instant film is posted on a social networking service.

### [Appendix 3]

The image processing device according to Appendix 1 or Appendix 2, in which
the processor is configured to apply a display effect corresponding to the information of the emotion in a case where the image is displayed.

### [Appendix 4]

The image processing device according to any one of Appendixes 1 to 3, in which
the image is searchable by using, as a search keyword, the information of the emotion.

### [Appendix 5]

The image processing device according to any one of Appendixes 1 to 4, in which
the processor is configured to:
estimate the emotion by using a machine learning model that outputs the information of the emotion in response to an input of the image; and
display the estimated emotion for the user.

### [Appendix 6]

The image processing device according to Appendix 5, in which
the information of the emotion and the image that are stored in association with each other are used as training data of the machine learning model.

### [Appendix 7]

The image processing device according to any one of Appendixes 1 to 6, in which
the image is a printed image printed and output on an instant film,
the plurality of timings includes a timing at which the printed image is captured, and
the processor is configured to:
   acquire a digital image of the instant film;
   read a text, which is actually written in the instant film by the user, by performing image analysis on the digital image;
   perform natural language analysis on the text;
   estimate the emotion at the timing at which the printed image is captured based on a result of the natural language analysis; and
   display the estimated emotion for the user.

### [Appendix 8]

The image processing device according to any one of Appendixes 1 to 7, in which
the image is a printed image printed and output on an instant film,
the plurality of timings include a timing at which a digital image of the instant film is posted on a social networking service, and
the processor is configured to:
   acquire a text which is input by the user in a case where the digital image is posted on the social networking service;
   perform natural language analysis on the text;
   estimate the emotion at the timing at which the digital image is posted on the social networking service based on a result of the natural language analysis; and
   display the estimated emotion for the user.

### [Appendix 9]

The image processing device according to any one of Appendixes 1 to 8, in which
the processor is configured to:
acquire state information of the user from a wearable device worn by the user;
estimate the emotion based on the state information; and
display the estimated emotion for the user.

### [Appendix 10]

The image processing device according to any one of Appendixes 1 to 9, in which
the processor is configured to:
detect an expression of a person appearing in the image;
estimate the emotion based on a detection result of the expression; and
display the estimated emotion for the user.

The technique of the present disclosure can also appropriately combine the various embodiments and/or the various modification examples. In addition, the technique of the present disclosure is not limited to each embodiment, and various configurations may be adopted without departing from the scope of the present disclosure. Further, the technique of the present disclosure extends to a program and a storage medium for non-temporarily storing the program.

The above-described content and the illustrated content are detailed explanations of a part according to the technique of the present disclosure, and are merely examples of the technique of the present disclosure. For example, the descriptions related to the configuration, the function, the operation, and the effect are descriptions related to examples of a configuration, a function, an operation, and an effect of a part according to the technique of the present disclosure. Therefore, it goes without saying that, in the above-described content and illustrated content, unnecessary parts may be deleted, new components may be added, or replacements may be made without departing from the spirit of the technique of the present disclosure. Further, in order to avoid complications and facilitate understanding of the part according to the technique of the present disclosure, in the above-described content and illustrated content, descriptions of technical knowledge and the like that do not require particular explanations to enable implementation of the technique of the present disclosure are omitted.

In this specification, "A and/or B" is synonymous with "at least one of A or B". That is, "A and/or B" means that only A may be included, that only B may be included, or that a combination of A and B may be included. Further, in this specification, even in a case where three or more matters are expressed by being connected using "and/or", the same concept as "A and/or B" is applied.

All documents, patent applications, and technical standards mentioned in this specification are incorporated herein by reference to the same extent as in a case where each document, each patent application, and each technical standard are specifically and individually described by being incorporated by reference.

## Claims

1. An image processing device comprising:
a processor, wherein
the processor is configured to:
receive an input of an emotion of a user for an image at a plurality of timings; and
store information of the emotion at the plurality of timings and the image in association with each other.

2. The image processing device according to claim 1, wherein
the image is a printed image printed and output on an instant film, and
the plurality of timings are a combination selected from a timing at which the printed image is captured, a timing at which an image of the instant film is stored as a digital image, and a timing at which the digital image of the instant film is posted on a social networking service.

3. The image processing device according to claim 1, wherein
the processor is configured to apply a display effect corresponding to the information of the emotion in a case where the image is displayed.

4. The image processing device according to claim 1, wherein
the image is searchable by using, as a search keyword, the information of the emotion.

5. The image processing device according to claim 1, wherein
the processor is configured to:
estimate the emotion by using a machine learning model that outputs the information of the emotion in response to an input of the image; and
display the estimated emotion for the user.

6. The image processing device according to claim 5, wherein
the information of the emotion and the image that are stored in association with each other are used as training data of the machine learning model.

7. The image processing device according to claim 1, wherein
the image is a printed image printed and output on an instant film,
the plurality of timings includes a timing at which the printed image is captured, and
the processor is configured to:
acquire a digital image of the instant film;
read a text, which is actually written in the instant film by the user, by performing image analysis on the digital image;
perform natural language analysis on the text;
estimate the emotion at the timing at which the printed image is captured based on a result of the natural language analysis; and
display the estimated emotion for the user.

8. The image processing device according to claim 1, wherein
the image is a printed image printed and output on an instant film,
the plurality of timings include a timing at which a digital image of the instant film is posted on a social networking service, and
the processor is configured to:
acquire a text which is input by the user in a case where the digital image is posted on the social networking service;
perform natural language analysis on the text;
estimate the emotion at the timing at which the digital image is posted on the social networking service based on a result of the natural language analysis; and
display the estimated emotion for the user.

9. The image processing device according to claim 1, wherein
the processor is configured to:
acquire state information of the user from a wearable device worn by the user;
estimate the emotion based on the state information; and
display the estimated emotion for the user.

10. The image processing device according to claim 1, wherein
the processor is configured to:
detect an expression of a person appearing in the image;
estimate the emotion based on a detection result of the expression; and
display the estimated emotion for the user.

11. A method for operating an image processing device, the method comprising:
receiving an input of an emotion of a user for an image at a plurality of timings; and
storing information of the emotion at the plurality of timings and the image in association with each other.

12. A program for operating an image processing device, the program causing a computer to execute a process comprising:
receiving an input of an emotion of a user for an image at a plurality of timings; and
storing information of the emotion at the plurality of timings and the image in association with each other.
